# EUROPÄISCHE PATENTSCHRIFT

(11) **EP 3 619 065 B1**
(45) Veröffentlichungstag und Bekanntmachung des Hinweises auf die Patenterteilung: **24.02.2021**
(21) Anmeldenummer: 18720985.3
(22) Anmeldetag: 12.04.2018
(51) Int. Cl.: B60G 17/015, B60G 17/056, B60G 17/052, F04B 27/14, F04B 27/24, F04B 39/08, F04B 41/06, F04B 49/00, F04B 49/22

(54) **VERFAHREN ZUM BETREIBEN EINER DRUCKREGELANLAGE MIT EINEM MEHRSTUFIGEN KOMPRESSOR, SOWIE DRUCKREGELANLAGE**
METHOD FOR OPERATING A PRESSURE CONTROL SYSTEM COMPRISING A MULTI-STAGE COMPRESSOR, AND PRESSURE CONTROL SYSTEM
PROCÉDÉ POUR FAIRE FONCTIONNER UNE INSTALLATION DE RÉGULATION DE PRESSION COMPRENANT UN COMPRESSEUR À ÉTAGES MULTIPLES, AINSI QU'INSTALLATION DE RÉGULATION DE PRESSION

(30) Priorität: 05.05.2017 DE 102017004369
(43) Veröffentlichungstag der Anmeldung: 11.03.2020
(73) Patentinhaber: WABCO GmbH, 30453 Hannover Niedersachsen (DE)
(72) Erfinder: STABENOW, Uwe, 30880 Laatzen (DE)
(74) Vertreter: Rabe, Dirk-Heinrich
(86) Internationale Anmeldenummer: PCT/EP2018/059364
(87) Internationale Veröffentlichungsnummer: WO 2018/202397

(56) Entgegenhaltungen:
- DE-A1-102011 083 614
- DE-A1-102011 084 921
- DE-A1-102012 005 303
- DE-B4-102008 034 240

## Beschreibung

Die Erfindung betrifft ein Verfahren zum Betreiben einer Druckregelanlage mit einem mehrstufigen Kompressor, insbesondere in einem Nutzfahrzeug, sowie eine Druckregelanlage mit einem mehrstufigen Kompressor.

Mehrstufige Kompressoren dienen dazu, eine hohe Verdichtung eines Druckmittels, insbesondere eines Gases, beispielsweise Luft, dadurch zu erreichen, dass das in einer ersten Verdichtungsstufe vorverdichtete Druckmittel in einer darauffolgenden zweiten Verdichtungsstufe zusätzlich verdichtet wird. Es können auch weitere Verdichtungsstufen in einer Kaskade vorhanden sein, in denen jeweils das von der vorhergehenden Verdichtungsstufe verdichtete Druckmittel weiter verdichtet wird.

Sollen Verbraucher beispielsweise einer Luftfederanlage oder einer Niveauregelanlage in einem Fahrzeug mit dem Druckmittel versorgt werden, kann ein derartiger mehrstufiger Kompressor verwendet werden, um das Druckmittel mit einem entsprechenden Druck zum Versorgen von Druckfedern bereitzustellen. Der mehrstufige Kompressor verdichtet dabei das in einen Ansaugraum eingeleitete Druckmittel aus der Atmosphäre über zwei oder mehrere Verdichtungsstufen und überführt das mehrstufig verdichtete Druckmittel an die Druckfedern. Alternativ kann auch ein bereits verdichtetes Druckmittel aus einem Druckmittelvorrat verwendet werden, das durch den Kompressor ein weiteres Mal verdichtet wird.

Dies ist beispielsweise in DE 10 2008 034 240 B4, die den Oberbegriff des Anspruchs 1 bzw. 9 offenbart, beschrieben, wonach eine Niveauregelanlage vorgesehen ist, bei der ein mehrstufiger Kompressor verwendet wird, um das Druckmittel aus der Atmosphäre oder aus einem Druckmittelvorrat zu fördern, wobei zwei Verdichtungsstufen vorgesehen sind. Wird Druckmittel aus der Atmosphäre verdichtet, wird das Druckmittel durch beide Verdichtungsstufen geleitet, während bei einer Förderung des Druckmittels aus dem Druckmittelvorrat eine Verdichtung des dem Verbraucher zugeführten Druckmittels lediglich mit der zweiten Verdichtungsstufe stattfindet. Um in diesem Fall die Verdichtungsarbeit der ersten Verdichtungsstufe zu reduzieren oder zu sperren, ist ein als 2/2-Wegeventil ausgeführtes Sperrventil vorgesehen, das bei einer Förderung aus dem Druckmittelvorrat eine Förderung von verdichtetem Druckmittel aus der ersten Verdichtungsstufe zur zweiten Verdichtungsstufe verhindert. Das Sperrventil wird hierbei elektrisch über eine Steuereinrichtung angesteuert.

Die DE 103 21 771 A1 beschreibt einen mehrstufigen Kompressor, bei dem zur Abschaltung der ersten Verdichtungsstufe eine Bypassleitung mit einem pneumatisch steuerbaren Sperrventil vorgesehen ist, die einen Ansaugraum des Kompressors mit dem ersten Verdichtungsraum verbindet. Das pneumatische Sperrventil wird hierbei in Abhängigkeit des Druckes im Ansaugraum geöffnet, so dass ein Druckausgleich zwischen dem Ansaugraum und dem Verdichtungsraum stattfinden kann. Dies dient dazu, die erste Verdichtungsstufe in Abhängigkeit des Druckes des in den Ansaugraum eingelassenen Druckmittels abzuschalten. Dadurch kann in Abhängigkeit des eingelassenen Druckmittels im einstufigen Betrieb eine hohe Verdichtung bei einem geringen Volumenstrom erreicht werden. Im zweistufigen Betrieb hingegen wird ein hoher Volumenstrom erreicht und das Druckmittel durchströmt zwei Verdichtungsstufen.

Gemäß DE 10 2011 083 614 A1 ist vorgesehen, in einem offenen Betriebsmodus Luft durch zwei Verdichtungsstufen zu verdichten und die verdichtete Luft einem Druckmittelvorrat zuzuführen. In einem geschlossenen Betriebsmodus kann die bereits verdichtete Luft aus dem Druckmittelvorrat in ein Zwischenvolumen zwischen der ersten und der zweiten Verdichtungsstufe eingelassen und durch eine der Verdichtungsstufen erneut verdichtet werden, um anschließend in die Verbraucher zu gelangen. Weiterhin ist auch eine Rückführung von Luft aus den Verbrauchern in den Druckmittelvorrat vorgesehen. Zum Steuern sind elektrisch betätigte Umschaltventile vorgesehen, die entsprechend die Strömungswege für die verdichtete oder die zu verdichtende Luft sperren und freigeben.

DE 10 2012 010 390 A1 beschreibt ein Niveauregelsystem, bei dem in einem geschlossenen Betriebsmodus über einen Kompressor bereits verdichtete Luft aus einem Druckvorratsbehälter in als Federbeine ausgeführte Verbraucher zugeführt wird. Zum Steuern des Druckes im Niveauregelsystem ist eine Druckbegrenzungsfunktion vorgesehen, die entweder in Form eines Ablassventils oder in Form eines Vorsteuerventils ausgestaltet ist, die jeweils bei einem zu hohen Druck im System Luft in die Atmosphäre ablassen.

Die DE102011084921A1 betrifft eine Kompressorschaltung für eine pneumatische Regelvorrichtung eines Fahrzeugs, umfassend einen Kompressor und einen Druckregler. Der Druckregler ist zwischen einer Eingangsseite des Kompressors und der pneumatischen Regelvorrichtung angeordnet, wobei der Druckregler dazu ausgebildet ist, einen an seiner der pneumatischen Regelvorrichtung zugewandten Seite anliegenden Vordruck von Luft der pneumatischen Regelvorrichtung zu messen und diese Luft mit einem Eingangsdruck der Eingangsseite des Kompressors zuzuführen, wobei der Druckregler dazu ausgebildet ist, den Eingangsdruck des Kompressors in Abhängigkeit von der Messung zu regeln.

Die DE102011083614A1 betrifft eine Trocknerschaltung für eine pneumatische Regelvorrichtung eines Fahrzeugs umfassend - einen Lufttrockner, - einen ersten Verdichter, wobei der erste Verdichter dazu ausgebildet ist, in der pneumatischen Regelvorrichtung vorhandene Systemluft zu verdichten, wobei der Lufttrockner, der erste Verdichter und an den ersten Verdichter anschließbare Subsysteme der pneumatischen Regelvorrichtung so angeordnet sind, dass im Betriebsmodus einer geschlossenen Luftversorgung zwischen den Komponenten eines der Subsysteme unter Verwendung des ersten Verdichters beförderte Luft unter Umgehung des Lufttrockners befördert wird.

Die DE102012005303A1 betrifft eine Druckluftversorgungsanlage zum Betreiben einer Pneumatikanlage, insbesondere einer Luftfederanlage eines Fahrzeugs, aufweisend: eine Druckluftzuführung, einen Druckluftanschluss zur Pneumatikanlage, einen Entlüftungsanschluss zur Umgebung, eine pneumatische Hauptleitung zwischen der Druckluftzuführung und dem Druckluftanschluss, die einen Lufttrockner und eine erste Drossel aufweist, eine Entlüftungsleitung zwischen dem Druckluftanschluss und dem Entlüftungsanschluss, die eine zweite Drossel aufweist. Die Nennweite der ersten Drossel und die Nennweite der zweiten Drossel für die Entlüftung der Druckluftversorgungsanlage sind druckabhängig einstellbar.

Es ist Aufgabe der Erfindung, ein Verfahren zum Betreiben einer Druckregelanlage mit einem mehrstufigen Kompressors anzugeben, das in einfacher und zuverlässiger Weise eine Verdichtungsleistung sowie einen verdichteten Volumenstrom des mehrstufigen Kompressors auf die Betriebsmodi der Druckregelanlage abstimmt. Weiterhin ist es Aufgabe der Erfindung, eine Druckregelanlage mit einem mehrstufigen Kompressor bereitzustellen.

Diese Aufgabe wird durch ein Verfahren nach Anspruch 1 sowie eine Druckregelanlage nach Anspruch 9 gelöst. Die Unteransprüche geben vorteilhafte Weiterbildungen an.

Erfindungsgemäß ist demnach vorgesehen, dass eine Verdichtungsleistung einer ersten Verdichtungsstufe eines mehrstufigen Kompressors, insbesondere in einem geschlossenen Betriebsmodus einer Druckregelanlage, insbesondere einer Luftfederanlage in einem Fahrzeug, durch ein pneumatisch gesteuertes Sperrventil in Abhängigkeit eines auf einer Steuerleitung vorherrschenden Steuerdruckes reduziert bzw. beschränkt - insbesondere auf ein Minimum beschränkt - wird. Die Reduzierung bzw. die Beschränkung der Verdichtungsleistung erfolgt erfindungsgemäß durch eine vom Sperrventil gesteuerte Druckbegrenzung und/oder Volumenstrombegrenzung eines durch die erste Verdichtungsstufe geförderten vorverdichteten Druckmittels, wobei bei einer maximalen Beschränkung eine Druckbegrenzung auf 0 bar absolut bzw. eine Volumenstrombegrenzung auf eine Durchflussrate von null aus der ersten Verdichtungsstufe vorliegt. D. h. unter Minimum wird eine maximale Beschränkung bzw. ein vollständiges Abschalten der ersten Verdichtungsstufe verstanden; die erste Verdichtungsstufe trägt somit zu einer Gesamt-Verdichtungsleistung des mehrstufigen Kompressors insbesondere im geschlossenen Betriebsmodus nicht mehr bei, so dass der Anteil der ersten Verdichtungsstufe am Energieverbrauch des mehrstufigen Kompressors lediglich auf Reibungsverluste minimiert wird.

Dadurch kann bereits der Vorteil erreicht werden, dass die Verdichtungsleistung der ersten Verdichtungsstufe bei einem Umschalten in den geschlossenen Betriebsmodus der Druckregelanlage, die mit dem mehrstufigen Kompressor betrieben wird, in einfacher und zuverlässiger Weise selbstregulierend bzw. automatisch angepasst werden kann. Da eine pneumatische Ansteuerung des Sperrventils erfolgt, sind keine weiteren Elektroniken nötig, die das Umschalten bewirken.

Als erste Verdichtungsstufe ist hierbei nicht zwangsläufig die im mehrstufigen Kompressor in Strömungsrichtung am Anfang liegende Verdichtungsstufe gemeint. Vielmehr wird darunter verstanden, dass die erste Verdichtungsstufe irgendeine Verdichtungsstufe im mehrstufigen Kompressor sein kann, auf die mindestens eine weitere Verdichtungsstufe - eine zweite Verdichtungsstufe - folgt, wobei die zweite Verdichtungsstufe nicht zwangsläufig direkt an die im Sinne der Erfindung erste Verdichtungsstufe angrenzen muss. Die zweite Verdichtungsstufe ist somit dadurch definiert, dass sie in Strömungsrichtung irgendwo hinter der ersten Verdichtungsstufe liegt, wobei die zweite Verdichtungsstufe dabei nicht zwangsläufig als die letzte Verdichtungsstufe des mehrstufigen Kompressors anzusehen ist.

In einem offenen Betriebsmodus der Druckregelanlage wird von dem mehrstufigen Kompressor Druckmittel, beispielsweise über eine Ansaugleitung bereitgestellte Ansaugluft aus der Atmosphäre, von der ersten Verdichtungsstufe vorverdichtet, beispielsweise auf einen Zwischendruck von 5-6bar bei einem Stabilisierungsdruck der ersten Verdichtungsstufe von beispielsweise 10-15bar, und in ein Zwischenvolumen eingeleitet. Von dort gelangt die vorverdichtete Luft in eine zweite Verdichtungsstufe, in der sie weiter verdichtet wird, beispielsweise auf einen Enddruck von 20bar, und aus der sie über einen Lufttrockner in ein oder mehrere Verbraucher, beispielsweise Luftfedern der Druckregelanlage, und/oder in einen Druckmittelvorrat gelangt. Somit wird die Gesamt-Verdichtungsleistung im offenen Betriebsmodus durch beide Verdichtungsstufen bestimmt.

Der geschlossene Betriebsmodus wird insbesondere dann eingestellt, wenn eine Versorgung der Verbraucher der Druckregelanlage mit hoch-verdichtetem und/oder getrocknetem Druckmittel erfolgen soll. Dies ist insbesondere dann der Fall, wenn eine schnelle Druckbeaufschlagung der Verbraucher gewünscht ist, beispielsweise dann, wenn eine schnelle Regelung durch Bereitstellung eines hohen End-Volumenstromes, d. h. einer hohen Luftmenge pro Zeit aus der zweiten bzw. letzten Verdichtungsstufe, durch die Luftfederregelung erforderlich ist. Außerdem kann der geschlossene Betriebsmodus eingestellt werden, wenn eine Rückförderung von Druckmittel aus den Verbrauchern in den Druckmittelvorrat erfolgen soll, da auch dann eine erneute Verdichtung zu gewährleisten ist.

Zum Umschalten von dem offenen Betriebsmodus in den geschlossenen Betriebsmodus wird beispielsweise ein Schaltventil, das den Druckmittelvorrat oder die Verbraucher mit der Speicherleitung verbindet, geöffnet, so dass bereits verdichtetes Druckmittel, im Folgenden Aufladedruckmittel genannt, in die Speicherleitung einströmen kann. Das Aufladedruckmittel kann zum einen das im Druckmittelvorrat gespeicherte Druckmittel, das bereits auf einen Vorratsdruck verdichtet wurde, sein. Soll im geschlossenen Betriebsmodus hingegen eine Rückförderung von bereits verdichtetem Druckmittel aus den Verbrauchern in den Druckmittelvorrat erfolgen, so ist das Druckmittel aus den Verbrauchern das Aufladedruckmittel, das in die Speicherleitung eingelassen wird. Dazu können für die Verbraucher und den Druckmittelvorrat zwei getrennte Schaltventile vorgesehen sein, die das Einströmen in die Speicherleitung steuern.

Über die Speicherleitung gelangt das Aufladedruckmittel erfindungsgemäß in das Zwischenvolumen zwischen der ersten und der zweiten Verdichtungsstufe und gleichzeitig beispielsweise über eine von der Speicherleitung abzweigende Steuerleitung zu einem Steuereingang des pneumatisch gesteuerten Sperrventils. Im Zwischenvolumen als auch am Steuereingang herrscht somit in etwa derselbe Druck, der etwas tiefer ist als der Vorratsdruck im Druckmittelvorrat oder dem Druck in den Verbrauchern, da die Drücke durch das Durchströmen des Schaltventils sowie der Speicherleitung abfallen. Im geschlossenen Betriebsmodus kann somit durch die zweite Verdichtungsstufe das bereits hochverdichtete Aufladedruckmittel zusätzlich verdichtet werden.

Ein Speicher-Volumenstrom des in die Speicherleitung eingelassenen, bereits verdichteten Aufladedruckmittels, d. h. eine Luftmenge pro Zeit in das Zwischenvolumen, ist hierbei insbesondere abhängig von einer Nennweite des Schaltventils und ggf. weiterer vorgeschalteter Ventile, durch die das Aufladedruckmittel strömt. Der Speicher-Volumenstrom bestimmt wiederum auch den End-Volumenstrom des durch die zweite Verdichtungsstufe geförderten Druckmittels. Durch die Energieeinsparung in der ersten Verdichtungsstufe können beide Volumenströme höher ausgelegt werden:
Dadurch, dass die Verdichtungsleistung und somit auch der Energieverbrauch eines Motors des mehrstufigen Kompressors der ersten Verdichtungsstufe im geschlossenen Betriebsmodus reduziert werden, kann dieser Energieübertrag bis zu einer akzeptierbaren maximalen Energiebegrenzung, insbesondere einer Strombegrenzung von beispielsweise 35 A, zum Betreiben der zweiten Verdichtungsstufe zusätzlich verwendet werden. Dazu kann beispielsweise die Nennweite des Schaltventils und somit der Speicher-Volumenstrom höher ausgelegt werden, ohne die akzeptierbare maximale Energiebegrenzung zu übersteigen. Folglich erhöht sich eine Wirkleistung des Druckregelsystems, da bei gleicher akzeptierbarer elektrischer Leistung ein deutlich erhöhter End-Volumenstrom durch die zweite Verdichtungsstufe bei gleichem Energieeinsatz gewährleistet werden kann.

Sobald im geschlossenen Betriebsmodus das Aufladedruckmittel in das Zwischenvolumen eingelassen wird, versucht die erste Verdichtungsstufe, ein vorverdichtetes Druckmittel bereitzustellen, das bis auf den dann im Zwischenvolumen vorherrschenden Aufladedruck des Aufladedruckmittels verdichtet ist. Dies wird erfindungsgemäß durch das Freigeben des Aufladedruckmittels automatisch verhindert, da automatisch über die Steuerleitung auch das Sperrventil angesteuert wird. Dieses schaltet dann je nach Steuerdruck sofort um und bewirkt eine Reduzierung bzw. Abschaltung der Verdichtungsleistung der ersten Verdichtungsstufe. Im bevorzugten Fall wird die Verdichtungsleistung der ersten Verdichtungsstufe vollständig abgeschaltet, d. h. die Verdichtungsleistung der ersten Verdichtungsstufe wird auf den Wert Null beschränkt.

Wird die Verdichtungsleistung der ersten Verdichtungsstufe im geschlossenen Betriebsmodus nicht vollständig abgeschaltet sondern lediglich reduziert, befindet sich im Zwischenvolumen eine Mischung aus dem von der ersten Verdichtungsstufe vorverdichteten Druckmittel sowie dem jeweiligen Aufladedruckmittel aus der Speicherleitung. Dadurch wird in dem Fall ein Mixdruckmittel mit einem Mix-Volumenstrom sowie einem Mixdruck, die sich aus den jeweiligen Volumenströmen bzw. Drücken zusammensetzen, aus dem Zwischenvolumen in die zweite Verdichtungsstufe gefördert.

Beim Einstellen des geschlossenen Betriebsmodus öffnet das Sperrventil in Abhängigkeit des Steuerdruckes und das in der ersten Verdichtungsstufe vorverdichtete Druckmittel wird teilweise oder vollständig - je nachdem, wie stark die Verdichtungsleistung der ersten Verdichtungsstufe beschränkt wird - aus einem ersten Verdichtungsraum der ersten Verdichtungsstufe über eine Entlüftungsleitung in die Atmosphäre oder in die Ansaugleitung abgeleitet, um eine Druckbegrenzung und/oder eine Volumenstrombegrenzung zu erreichen. Dadurch wird erfindungsgemäß bewirkt, dass das vorverdichtete Druckmittel im geschlossenen Betriebsmodus nur in einem festgelegten Umfang, d. h. bis zu einem bestimmten Grenzdruck von beispielsweise 0 bar oder 1 bar oder einem bestimmten Grenz-Volumenstrom, aus der ersten Verdichtungsstufe in das Zwischenvolumen gelangt. Im Falle eines vollständigen Abschaltens (Beschränkung auf null) der ersten Verdichtungsstufe gelangt kein vorverdichtetes Druckmittel in das Zwischenvolumen.

Im offenen Betriebsmodus liegt der Steuerdruck am Sperrventil unter einem Öffnungsdruck des Sperrventils, ab dem das Sperrventil öffnet, so dass das Sperrventil geschlossen bleibt und die vorverdichtete Luft vollständig in das Zwischenvolumen gelangt. Somit wird vorteilhafterweise durch das zusätzliche Sperrventil der Betrieb der Druckregelanlage im offenen Betriebsmodus nicht beeinflusst.

Durch das vom Sperrventil gesteuerte Zurückführen des in der ersten Verdichtungsstufe vorverdichteten Druckmittels in die Entlüftungsleitung wird also dafür gesorgt, dass im Gegensatz zum offenen Betriebsmodus kein bzw. nur ein Teil des durch die erste Verdichtungsstufe verdichteten Druckmittels durch diese in das Zwischenvolumen gefördert wird. Dadurch trägt die erste Verdichtungsstufe nicht mehr bzw. nur anteilig zur Gesamt-Verdichtungsleistung des Kompressors bei.

Der Hauptteil der Gesamt-Verdichtungsleistung im geschlossenen Betriebsmodus wird also durch eine Verdichtung des aus der Speicherleitung in das Zwischenvolumen eingelassenen und nicht durch die erste Verdichtungsstufe geförderten Aufladedruckmittels erreicht. Ein Einströmen des Aufladedruckmittels aus dem Zwischenvolumen in die erste Verdichtungsstufe wird durch ein erstes Auslassventil in der ersten Verdichtungsstufe, beispielsweise ein zum Zwischenvolumen öffnendes Rückschlagventil, verhindert. Somit findet kein Druckausgleich zwischen dem Zwischenvolumen und dem ersten Verdichtungsraum der ersten Verdichtungsstufe statt.

Dadurch wird vorteilhafterweise automatisch die Verdichtungsleistung der ersten Verdichtungsstufe im geschlossenen Betriebsmodus beschränkt, da die erste Verdichtungsstufe das Druckmittel nicht auf den im Zwischenvolumen vorherrschenden Zwischendruck des Aufladedruckmittels verdichtet. Die Leistungsaufnahme der ersten Verdichtungsstufe kann somit begrenzt werden, wobei sich diese Leistungsaufnahme bei einem vollständigen Abschalten im Wesentlichen auf die Reibungsverluste beschränkt. Die Antriebsleistung eines Motors des Kompressors wird somit verringert, der Energiebedarf sinkt und kann somit im geschlossenen Betriebsmodus hauptsächlich auf den Betrieb der zweiten bzw. weiterer Verdichtungsstufen und somit des End-Volumenstromes abgestimmt werden. Zudem kann den Verbrauchern oder dem Druckmittelvorrat ein Druckmittel zugeführt werden, das eine hohe Trocknungsstufe erreicht hat, da der Anteil an nicht-getrocknetem Druckmittel, das im Wesentlichen aus der ersten Verdichtungsstufe und damit aus der Atmosphäre, gefördert wird, reduziert ist.

Dadurch, dass die erfindungsgemäße Ansteuerung des Sperrventils pneumatisch erfolgt und dabei unmittelbar an die Freigabe des Aufladedruckmittels aus dem Druckmittelvorrat oder den Verbrauchern in das Zwischenvolumen gekoppelt ist, erfolgt die Umschaltung ohne zusätzlichen Aufwand und Zeitverluste. Da das Aufladedruckmittel nicht durch die erste Verdichtungsstufe in den mehrstufigen Kompressor eingeleitet wird, kann ein einfacher Aufbau sowie Betrieb der Druckregelanlage erreicht werden, da das unverdichtete Druckmittel im offenen Betriebsmodus und das Aufladedruckmittel im geschlossenen Betriebsmodus an unterschiedlichen Stellen in den mehrstufigen Kompressor eingeleitet werden und somit kein Umschalten der Druckmittelquelle der ersten Verdichtungsstufe nötig ist.

Um ein ungewolltes Öffnen des Sperrventils im offenen Betriebsmodus zu vermeiden, ist gemäß einer ersten Ausführungsform vorgesehen, den Öffnungsdruck des Sperrventils an die maximale Verdichtungsleistung der ersten Verdichtungsstufe und somit an einen durch die erste Verdichtungsstufe maximal erreichbaren Zwischendruck unter Berücksichtigung eines minimal möglichen Aufladedruckes des Aufladedruckmittels anzupassen. Durch die entsprechende Einstellung des Öffnungsdruckes wird somit für den offenen Betriebsmodus eine Sperrfunktion ausgebildet, durch die ein Schalten des Sperrventils durch das von der ersten Verdichtungsstufe vorverdichtete Druckmittel verhindert wird. Die Druckregelanlage bzw. der mehrstufige Kompressor ist in dem Fall an den Öffnungsdruck in entsprechender Weise anzupassen, so dass dieser im offenen Betriebsmodus durch die erste Verdichtungsstufe nicht erreicht wird. Beträgt beispielsweise der maximal zulässige Enddruck des Druckregelsystems 20bar, wird ein maximaler Zwischendruck von ca. 4,5bar erreicht, so dass ein Öffnungsdruck des Sperrventils von beispielsweise 5bar eingestellt werden kann, der in etwa auch dem minimalen Aufladedruck des Aufladedruckmittels entspricht.

In diesem Fall bleibt das Sperrventil im offenen Betriebsmodus bei einem Zwischendruck von 4,5 bar geschlossen und der mehrstufige Kompressor fördert verdichtetes Druckmittel aus der zweiten Verdichtungsstufe mit einem Enddruck von ca. 20bar. Im geschlossenen Betriebsmodus steigt der Zwischendruck und somit auch der Steuerdruck am Sperrventil auf über 5bar, das Sperrventil öffnet, die Verdichtungsleistung der ersten Verdichtungsstufe wird reduziert und durch die erneute Verdichtung des Aufladedruckmittels ist durch die zweite Verdichtungsstufe ein hoher Enddruck erreichbar, der den Verbrauchern oder dem Druckmittelvorrat zugeführt werden kann. Somit kann in einfacher Weise ein ungewolltes Öffnen des Sperrventils im offenen Betriebsmodus ohne zusätzliche Bauteile erreicht werden, indem lediglich eine entsprechende Anpassung von Parametern der Druckregelanlage stattfindet.

Gemäß einer alternativen Ausführungsform ist zum Ausbilden der Sperrfunktion zwischen der Steuerleitung und dem Zwischenvolumen ein Zusatzventil vorgesehen, das beispielsweise als ein Überdruckventil, insbesondere als Rückschlagventil, oder als pneumatisches Steuerventil ausgebildet sein kann. Das Zusatzventil sperrt den Durchgang von der ersten Verdichtungsstufe vorverdichtetem Druckmittel aus dem Zwischenvolumen in Richtung des Sperrventils. Dadurch kann in einfacher Weise eine alternative Sperrwirkung der ersten Verdichtungsstufe im offenen Betriebsmodus vermieden werden, wobei die erste Verdichtungsstufe durch das Vorsehen eines zusätzlichen Ventils auch Druckmittel mit einem höheren Zwischendruck fördern kann als der Öffnungsdruck des Sperrventils. Somit ist eine Anpassung der Parameter der Druckregelanlage nicht zwingend erforderlich.

Das Sperrventil kann als pneumatisch betätigtes 2/2-Wegeventil mit einer Feder ausgeführt sein, wobei die Feder das Wegeventil in seine geschlossene Stellung überführt sobald der Steuerdruck unter den Öffnungsdruck von beispielsweise 5 bar abfällt. Falls als Zusatzventil ein Überdruckventil vorgesehen ist, um im offenen Betriebsmodus ein unbeabsichtigtes Öffnen des Sperrventils zu vermeiden, kann der Öffnungsdruck auch weniger als 5bar betragen, da die Steuerleitung außer im geschlossenen Betriebsmodus drucklos ist. Ist der Steuerdruck größer als der Öffnungsdruck, ist das Sperrventil vollständig geöffnet. In seiner geöffneten Stellung verbindet das Sperrventil den ersten Verdichtungsraum mit der Entlüftungsleitung, wobei in Abhängigkeit eines Ventilquerschnittes des Sperrventils das in der ersten Verdichtungsstufe vorverdichtete Druckmittel vollständig in die Entlüftungsleitung abgeleitet wird oder anteilig in die Entlüftungsleitung und anteilig über das erste Auslassventil in das Zwischenvolumen gelangt, so dass ein Abschalten oder eine Beschränkung der Verdichtungsleistung der ersten Verdichtungsstufe erreicht wird.

Vorteilhafterweise ist mit einem derartigen pneumatischen Sperrventil ein einfacher und kostengünstiger Aufbau der Druckregelanlage realisierbar, mit dem sich der Wirkungsgrad des Kompressors optimal abstimmen lässt, d. h. ein hoher Speicher-Volumenstrom durch Vergrößerung der Nennweite insbesondere des Schaltventils bei einem gleichzeitig festlegbaren maximalen Energieverbrauch und einem getrocknetem Druckmittel. Ohne diese Auslegung würde die Energie im System erhöht werden und zusätzlich ein nicht nachvollziehbarer Trocknungsgehalt des Systems entstehen. Wird nur der rein geschlossene Betrieb durch Komplettabschaltung der ersten Verdichtungsstufe erreicht, entsteht eine eindeutige physikalische Regelung in Bezug auf Trocknungsgehalt und Energieverbrauch, sowie Energieerhalt des Systems.

Gemäß einer alternativen Ausbildung kann auch ein pneumatisch gesteuertes Proportionalitätsventil als Sperrventil verwendet werden. Dieses öffnet je nach Höhe des anliegenden Steuerdrucks kontinuierlich oder stufenweise ab dem Öffnungsdruck, so dass die Verdichtungsleistung der ersten Verdichtungsstufe variabel abgestimmt werden kann. Somit wird das in der ersten Verdichtungsstufe vorverdichtete Druckmittel in einer vom Steuerdruck abhängigen Zwischenstellung des Sperrventils aus dem ersten Verdichtungsraum anteilig in die Ansaugleitung oder die Atmosphäre zurückgeführt, wobei der Anteil abhängig vom anliegenden Steuerdruck ist. Der restliche Anteil des Druckmittels wird von der ersten Verdichtungsstufe in das Zwischenvolumen gefördert.

Dadurch kann vorteilhafterweise eine variable Reduzierung der Verdichtungsleistung der ersten Verdichtungsstufe erreicht werden, die abhängig vom Aufladedruck des Aufladedruckmittels ist. Liegt beispielsweise ein Aufladedruckmittel mit einem hohen Aufladedruck vor, d. h. einer hohen Verdichtung, kann die Verdichtungsleistung der ersten Verdichtungsstufe im geschlossenen Betriebsmodus stärker reduziert oder gar abgeschaltet werden und bei niedrigem Aufladedruck kann unterstützend eine höhere Verdichtungsleistung durch die erste Verdichtungsstufe eingestellt werden. Dadurch kann in beiden Fällen die Gesamt-Verdichtungsleistung und der Wirkungsgrad des Kompressors optimal an die tatsächlich vorherrschenden Bedingungen angepasst werden, indem die Druckbegrenzung und/oder die Volumenstrombegrenzung entsprechend über das Sperrventil eingestellt wird.

Insbesondere kann dies in Abhängigkeit des vorgegebenen Energieverbrauches, d. h. der oberen Energiebegrenzung, geschehen. Das pneumatische Sperrventil wird dann derartig ausgelegt, dass die erste Verdichtungsstufe so lange für eine Verdichtung hinzugezogen wird, bis eine festgelegte obere Energiebegrenzung für den Kompressor erreicht ist. Wird die obere Strombegrenzung überschritten, schaltet das Sperrventil automatisch um, so dass die Leistungsaufnahme der ersten Verdichtungsstufe verringert wird und der Stromverbrauch wieder innerhalb der Grenzwerte liegt. Dadurch kann der durch die zweite Verdichtungsstufe bereitgestellte End-Volumenstrom und die Gesamt-Verdichtungsleistung bei gleichzeitiger Einhaltung der Energievorgaben im geschlossenen Betriebsmodus optimal aufeinander abgestimmt werden. Diese Abstimmung ist sowohl für ein pneumatisches Wegeventil als auch für ein Proportionalitätsventil möglich.

Der optimale Betrieb der Druckregelanlage wird somit für den geschlossenen Betriebsmodus durch eine optimal ausgelegte zweite Verdichtungsstufe erreicht, die durch den maximalen Speicher-Volumenstrom, der insbesondere durch die Nennweite des Schaltventils definiert wird, sowie der abgeschalteten bzw. reduzierten ersten Verdichtungsstufe an die Leistungsgrenze des mehrstufigen Kompressors oder der oberen Energiegrenze befüllt wird. Ergänzend kann zur Sicherheit auch ein zusätzliches Druckbegrenzungsventil in der Speicherleitung vorgesehen sein, das einen maximalen Aufladedruck in der Speicherleitung festlegt, wobei der maximale Aufladedruck in Abhängigkeit der maximalen Energiebegrenzung gewählt werden kann, so dass die zweite Verdichtungsstufe nicht über ihrer Leistungsgrenze bzw. der Leistungsgrenze ihres Antriebs betrieben wird. Ergänzend kann auch der Aufbau der zweiten Verdichtungsstufe des mehrstufigen Kompressors angepasst werden, indem beispielsweise ein Kolben, der für die Verdichtung in der zweiten Verdichtungsstufe sorgt, größer ausgelegt wird.

Ergänzend kann als Sperrventil auch ein 3/2 Wegeventil bzw. 3/2 Proportionalitätsventil vorgesehen sein, so dass vorteilhafterweise auch im offenen Betriebsmodus eine Entlüftung der Speicherleitung möglich ist.

Erfindungsgemäß ist der mehrstufige Kompressor als ein Kolbenkompressor ausgeführt, wobei durch einen ersten Kolben eine erste Verdichtungsstufe ausgebildet wird und durch einen zweiten Kolben die zweite Verdichtungsstufe, die durch das Zwischenvolumen miteinander verbunden sind, wobei auch weitere Verdichtungsstufen mit weiteren Kolben vorhanden sein können. Alle Kolben werden von einem Motor über einen Kolbenantrieb bewegt, um nacheinander das Druckmittel in dem entsprechenden Verdichtungsraum zu verdichten. Die Verdichterstufen weisen unterschiedliche Verdichtungsvolumen auf, um durch die erste Verdichtungsstufe eine Vorverdichtung und durch die zweite Verdichtungsstufe eine zusätzliche Verdichtung und durch ggf. weitere Verdichtungsstufe eine weitere Verdichtung erreichen zu können. Der Kolbenkompressor ist Teil einer Druckregelanlage, die über eine Verdichtung von Luft als Druckmittel mehrere Federn mit Druckluft versorgt, um beispielsweise eine Federung oder ein Heben und Senken eines Teils des Fahrzeuges zu erreichen, wobei dies in einem geschlossenen oder einem geöffneten Betriebsmodus stattfinden kann.

Vorteilhafterweise können das Sperrventil und die dazugehörigen Übertragungsleitungen zur pneumatischen und selbstregulierenden Abstimmung des Kompressors im geschlossenen Betriebsmodus platzsparend in einem Kompressorgehäuse, beispielsweise in einem Kompressordeckel, eingebaut werden. Dadurch können Platz und Gewicht gespart werden und zudem ein einfacher Aufbau mit geringen pneumatischen Übertragungswegen und somit wenigen Druckverlusten erreicht werden. Zudem ist vorteilhafterweise eine einfache Nachrüstbarkeit der zusätzlichen pneumatischen Komponenten in einem üblichen mehrstufigen Kompressor möglich.

Die Erfindung wird im Folgenden anhand der beiliegenden Zeichnungen näher erläutert. Es zeigen:
- Fig. 1a, b, c: eine Luftfederanlage mit einem zweistufigen Kompressor in unterschiedlichen Ausführungsformen;
- Fig. 2: einen zweistufigen Kompressor mit einem integrierten druckgesteuerten Sperrventil gemäß einer ersten Ausführungsform; und
- Fig. 3: ein Flussdiagramm zur Durchführung des erfindungsgemäßen Verfahrens.

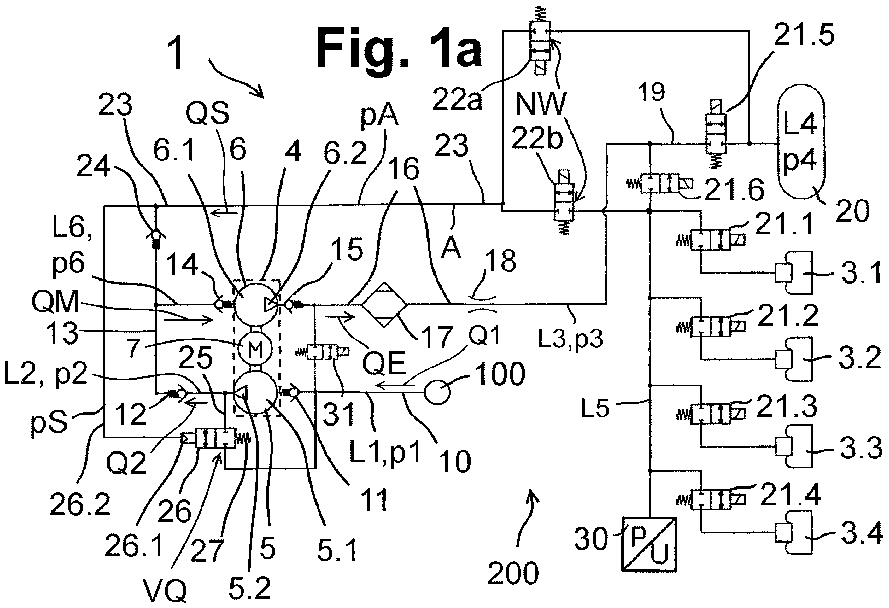

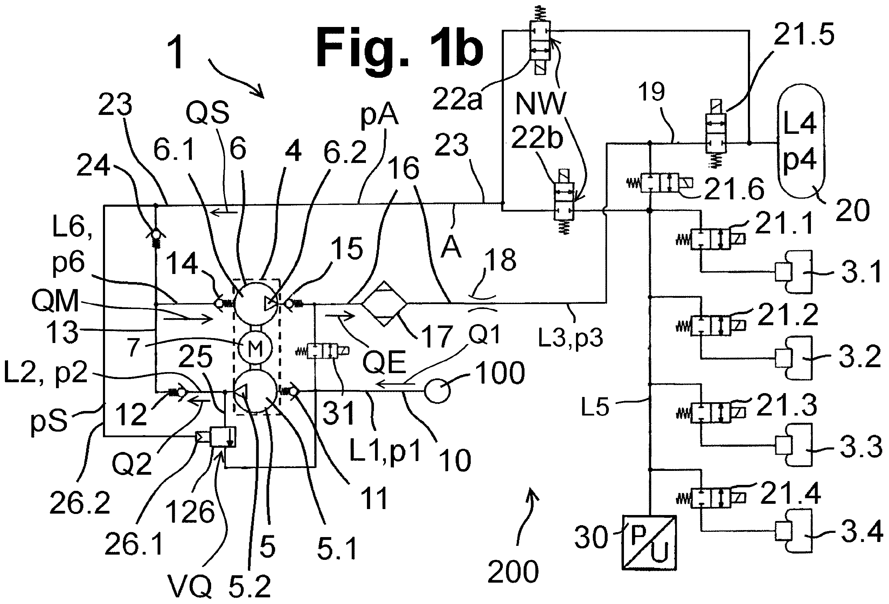

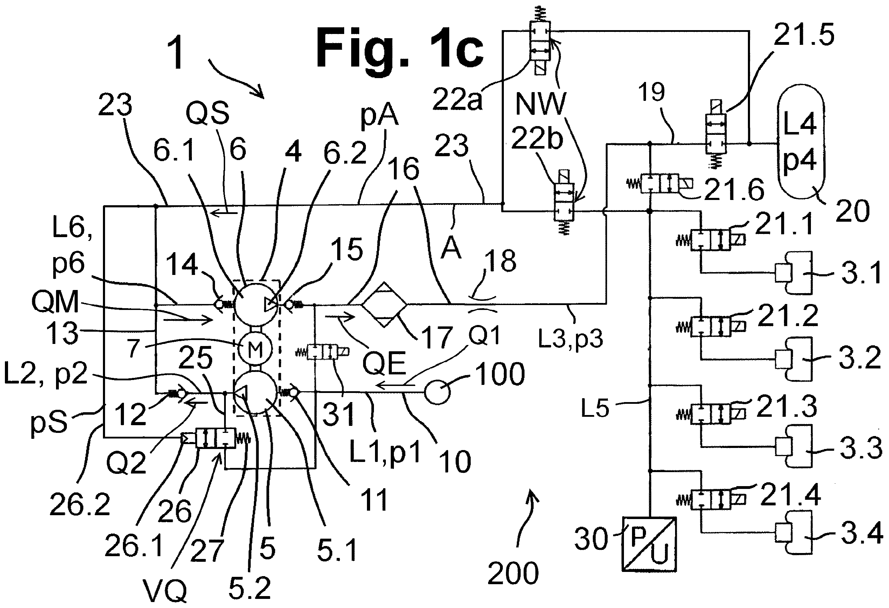

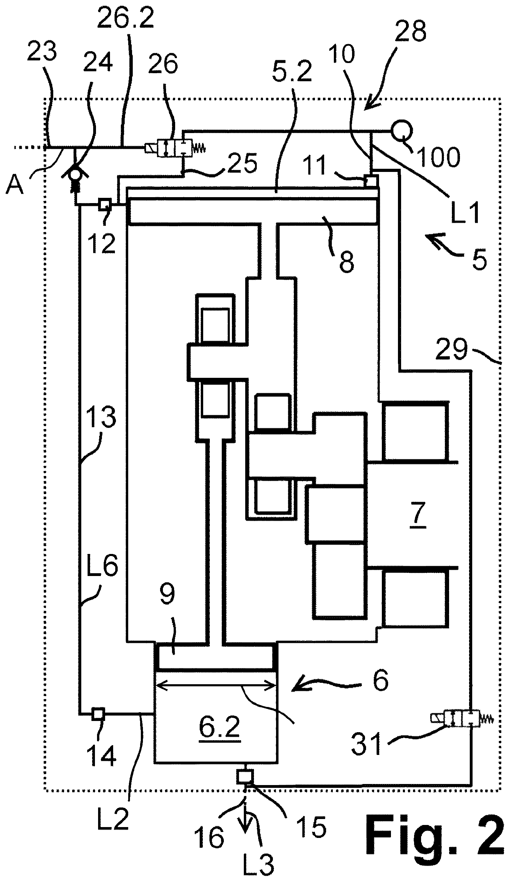

Gemäß Figur 1a, b, c ist jeweils eine Druckregelanlage, beispielsweise eine Luftfederanlage 1 vorgesehen, die vier Druckmittelkammern 3.1, 3.2, 3.3, 3.4 aufweist, die jeweils einem Verbraucher, beispielsweise Luftfedern eines Fahrzeuges 200, zugeordnet sind. Die Druckmittelkammern 3.i werden mit einem verdichteten Druckmittel L3, beispielsweise Luft, versorgt, wobei das verdichtete Druckmittel L3 in einem zweistufigen Kompressor 4, beispielsweise einem in Fig. 2 dargestellten Kolbenkompressor verdichtet wird.

Der zweistufige Kompressor 4 weist dazu eine erste Verdichtungsstufe 5 sowie eine zweite Verdichtungsstufe 6 auf, die jeweils einen Ansaugraum 5.1, 6.1 und einen Verdichtungsraum 5.2, 6.2 aufweisen, wobei das in den jeweiligen Ansaugraum 5.1, 6.1 einströmende Druckmittel L1, L6 in dem Verdichtungsraum 5.2, 6.2 verdichtet wird. Angetrieben werden die Verdichtungsstufen 5, 6 durch einen Motor 7, der bewirkt, dass sich ein in der jeweiligen Verdichtungsstufe 5, 6 befindlicher Kolben 8, 9 auf- und abbewegt und dadurch das im Ansaugraum 5.1, 6.1 bereitgestellte Druckmittel L1, L6 entsprechend verdichtet wird.

Die Druckregelanlage 1 kann gemäß dieser Ausführung in zwei Betriebsmodi betrieben werden, einem offenen Betriebsmodus BMo (open mode) und einem geschlossenen Betriebsmodus BMc (closed mode), in denen jeweils Luft als Druckmittel L1, L2, L3, L4, L5, L6 gefördert und verdichtet wird. Im offenen Betriebsmodus BMo wird Ansaugluft L1 aus der Atmosphäre 100, d. h. mit einem Luftdruck bzw. Ansaugdruck p1 von ca. 1 bar und einem Ansaug-Volumenstrom Q1, über eine Ansaugleitung 10 sowie ein erstes Einlassventil 11 in den ersten Ansaugraum 5.1 der ersten Verdichtungsstufe 5 eingeleitet. Anschließend wird die Ansaugluft L1 über den ersten Kolben 8 (s. Fig. 2) zunächst vorverdichtet und dabei in den ersten Verdichtungsraum 5.2 geleitet. Aus dem ersten Verdichtungsraum 5.2 strömt die vorverdichtete Luft L2 mit einem Zwischendruck p2 sowie einem Zwischen-Volumenstrom Q2 über ein erstes Auslassventil 12, beispielsweise ein Rückschlagventil, in ein Zwischenvolumen 13.

Aus dem Zwischenvolumen 13 gelangt die vorverdichtete Luft L2 über ein zweites Einlassventil 14 in den zweiten Ansaugraum 6.1 der zweiten Verdichtungsstufe 6, aus der die vorverdichtete Luft L2 über einen zweiten Kolben 9 (s. Fig. 2) weiter verdichtet wird und in den zweiten Verdichtungsraum 6.2 eingeleitet wird. Aus der zweiten Verdichtungsstufe 6 gelangt die verdichtete Luft L3 mit einem Enddruck p3 über ein zweites Auslassventil 15 in eine Auslassleitung 16 zu einem Lufttrockner 17 und einer Düse 18. Anschließend leitet die Auslassleitung 16 die verdichtete Luft L3 zu den Druckmittelkammern 3.1, 3.2, 3.3, 3.4 der angeschlossenen Verbraucher, beispielsweise der Luftfedern, sowie über eine Vorratsleitung 19 zu einem Druckmittelvorrat 20, in dem die verdichtete Luft L3 als gespeicherte Luft L4 mit einem Vorratsdruck p4, der aufgrund von Verlusten etwas geringer ist als der Enddruck p3, gespeichert wird.

Der Druckmittelvorrat 20 sowie die Druckmittelkammern 3.1, 3.2, 3.3, 3.4 sind jeweils durch ein steuerbares Ventil 21.1, 21.2, 21.3, 21.4, 21.5, 21.6 beispielsweise einem 2/2-Magnetventil, mit der Auslassleitung 16 bzw. der Vorratsleitung 19 verbindbar, so dass je nach Stellung der steuerbaren Ventile 21.i die verdichtete Luft L3 in die Druckmittelkammern 3.1, 3.2, 3.3, 3.4 zum Steuern der Verbraucher oder in den Druckmittelvorrat 20 strömen kann.

Demnach wird die verdichtete Luft L3 bei geöffnetem sechsten Ventil 21.6 sowie geöffnetem ersten Ventil 21.1 in die erste Druckmittelkammer 3.1, bei geöffnetem zweiten Ventil 21.2 in die zweite Druckmittelkammer 3.2, bei geöffnetem dritten Ventil 21.3 in die dritte Druckmittelkammer 3.3 und bei geöffnetem vierten Ventil 21.4 in die vierte Druckmittelkammer 3.4 geleitet, wobei dann das fünfte Ventil 21.5 geschlossen ist und somit keine verdichtete Luft L3 in den Druckmittelvorrat 20 strömen kann.

Befinden sich andererseits die Ventile 21.1, 21.2, 21.3, 21.4, 21.6 in der geschlossenen Stellung und das fünfte Ventil 21.5 ist geöffnet, kann durch den Lufttrockner 17 getrocknete und verdichtete Luft L3 in den Druckmittelvorrat 20 eingeleitet und darin gespeichert werden. Eine Drucküberwachung kann über ein Druckmessgerät 30 erfolgen. Über ein zusätzliches Ablassventil 31 kann die verdichtete Luft L3 in die Atmosphäre 100 abgelassen werden.

Die im Druckmittelvorrat 20 gespeicherte Luft L4 kann im geschlossenen Betriebsmodus BMc als Aufladedruckmittel A in das Zwischenvolumen 13 eingelassen werden, so dass die bereits verdichtete Luft L4 ein weiteres Mal verdichtet wird. Dazu wird gemäß dieser Ausführungsform das fünfte Ventil 21.5 geschlossen und ein erstes Schaltventil 22a geöffnet, das in einer zwischen dem fünften Ventil 21.5 und dem Druckmittelvorrat 20 abzweigenden Speicherleitung 23 angeordnet ist. Die Speicherleitung 23 ist gemäß der Ausführungsform in Fig. 1a und 1b über ein Zusatzventil 24, beispielsweise ein Absperrventil, insbesondere ein Rückschlagventil, oder ein pneumatisches Wegeventil, mit dem Zwischenvolumen 13 verbunden, so dass in der geöffneten Stellung des ersten Schaltventils 22a die gespeicherte Luft L4 in das Zwischenvolumen 13 sowie in den zweiten Ansaugraum 6.1 einströmen kann, um von der zweiten Verdichtungsstufe 6 erneut verdichtet zu werden. Ein Einströmen der gespeicherten Luft L4 in die erste Verdichtungsstufe 5 wird durch das erste Auslassventil 12 verhindert, das in dieser Richtung schließt.

Ist im geschlossenen Betriebsmodus BMc eine Rückführung von Kammerluft L5 aus den Druckmittelkammern 3.i in den Druckmittelvorrat 20 gewünscht, so wird das der jeweiligen Druckmittelkammer 3.i zugeordnete Ventil 21.i (mit i=1...4) sowie ein zweites Schaltventil 22b geöffnet und das sechste Ventil 21.6 geschlossen, so dass die Kammerluft L5 als Aufladedruckmittel A in die Speicherleitung 23 eingelassen wird. Das erste Schaltventil 22a ist in diesem Fall ebenfalls geschlossen und das fünfte Ventil 21.5 geöffnet, um ein Rückführen in den Druckmittelvorrat 20 zu ermöglichen. Ist lediglich eine Verdichtung von gespeicherter Luft L4 in der Druckregelanlage 1 vorgesehen, kann der Pfad über das zweite Schaltventil 22b auch entfallen.

Eine Nennweite NW der Schaltventile 22a, 22b wird hierbei beispielsweise zwischen 1mm und 4mm gewählt, so dass ein hoher Speicher-Volumenstrom QS in das Zwischenvolumen 13 eingestellt werden kann.

Da im geschlossenen Betriebsmodus BMc die erste Verdichtungsstufe 5 nicht zwingend benötigt wird zum Vorverdichten, da bereits ein (vor)verdichtete Aufladedruckmittel A über die Speicherleitung 23 in das Zwischenvolumen 13 eingeleitet wird, wird erfindungsgemäß die Verdichtungsleistung der ersten Verdichtungsstufe 5 beschränkt, insbesondere abgeschaltet, wobei darunter zu verstehen ist, dass von der ersten Verdichtungsstufe 5 vorverdichtete Luft L2 nicht in vollem Umfang oder - vorzugsweise - nicht aus dem ersten Verdichtungsraum 5.2 durch das erste Auslassventil 12 in das Zwischenvolumen 13 gefördert wird. D.h. es wird eine Druckbegrenzung und/oder eine Volumenstrombegrenzung des in das Zwischenvolumen 13 geförderten vorverdichteten Druckmittels L2 auf einen durch ein Sperrventil 26 eingestellten Grenzdruck pG bzw. Grenz-Volumenstrom QG erreicht.

Dazu zweigt zwischen dem ersten Auslassventil 12 und dem ersten Verdichtungsraum 5.2 eine Entlüftungsleitung 25 ab, die entweder in die Ansaugleitung 10 oder in die Atmosphäre 100 mündet. In der Entlüftungsleitung 25 ist ein Sperrventil 26 angeordnet, das einen pneumatischen Steuereingang 26.1 aufweist, der mit einer Steuerleitung 26.2 verbunden ist, wobei die Steuerleitung 26.2 gemäß dieser Ausführung von der Speicherleitung 23 abzweigt, so dass das Aufladedruckmittel A in die Steuerleitung 26.2 eingelassen wird und somit am Steuereingang 26.1 ein in der Steuerleitung 26.2 vorherrschender Aufladedruck pA des Aufladedruckmittels A anliegt. Das Sperrventil 26 wird in Abhängigkeit eines Steuerdruckes pS geschaltet, der bei geöffnetem ersten Schaltventil 22a oder zweiten Schaltventil 22b in etwa dem am Steuereingang 26.1 anliegenden Aufladedruck pA des jeweiligen Aufladedruckmittels A entspricht.

Sobald also das jeweilige Schaltventil 22a, 22b geöffnet wird, um den geschlossenen Betriebsmodus BMc zu aktivieren und die Luftfederanlage 1 mit der gespeicherten Luft L4 zu betreiben oder die Verbraucherluft L5 rückzufördern, wird automatisch über das Sperrventil 26 die Verdichtungsleistung der ersten Verdichtungsstufe 5 beschränkt oder abgeschaltet. Dazu schaltet der am Steuereingang 26.1 anliegende pneumatische Steuerdruck pS das Sperrventil 26 derartig um, dass im ersten Verdichtungsraum 5.2 vorhandene vorverdichtete Luft L2 zumindest anteilig in die Ansaugleitung 10 oder optional in die Atmosphäre 100 zurückgeführt wird, so dass keine oder weniger vorverdichtete Luft L2, d. h. vorverdichte Luft L2 bis zu einem Grenzdruck pG bzw. bis zu einem Grenz-Volumenstrom QG, durch das erste Auslassventil 12 in das Zwischenvolumen 13 gefördert wird. Eine Verdichtung findet somit hauptsächlich - insbesondere ausschließlich - über die zweite Verdichtungsstufe 6 statt, um die Druckmittelkammern 3.i mit Luft zu versorgen oder eine Rückförderung in den Druckmittelvorrat 20 zu erreichen.

Das Sperrventil 26 ist gemäß einer ersten Ausführungsform als pneumatisches 2/2-Wegeventil mit einer Feder 27 ausgebildet. Demnach gibt das pneumatische Steuerventil die Entlüftungsleitung 25 frei, sobald ein festgelegter Steuerdruck pS überschritten wird, der gegen die Kraft der Feder 27 das Sperrventil 26 vollständig öffnet. Ist der Steuerdruck pS zu niedrig, insbesondere niedriger als ein Öffnungsdruck pO des Sperrventils 26, schließt das Sperrventil 26 vollständig.

Der Öffnungsdruck pO kann hierbei derartig gewählt werden, dass das Zusatzventil 24, das im offenen Betriebsmodus BMo verhindert, dass das Sperrventil 26 durch das vorverdichtete Druckmittel L2 bereits öffnet, entfallen kann, wie in der Ausführungsform in Fig. 1c gezeigt. Dazu ist der Öffnungsdruck pO höher zu wählen als ein maximal erreichbarer Zwischendruck p2max, der durch die erste Verdichtungsstufe 5 zu erreichen ist. Weiterhin ist ein minimaler Aufladedruck pAmin des Aufladedruckmittels A zu berücksichtigen, so dass im offenen Betriebsmodus BMo ein unbeabsichtiges Öffnen des Sperrventils 26 und im geschlossenen Betriebsmodus BMc ein garantiertes Öffnen des Sperrventils 26 und somit eine Leistungsreduktion gewährleistet werden kann. Die gesamte Luftfederanlage 1 bzw. der mehrstufige Kompressor 4 sind in dem Fall an diesen Öffnungsdruck pO des Sperrventils 26 entsprechend anzupassen, so dass insbesondere der minimale Aufladedruck pAmin sowie der maximale Zwischendruck p2max entsprechend eingestellt werden.

Somit ist entweder durch den Öffnungsdruck pO und/oder durch das Zusatzventil 24 eine Sperrfunktion ausbildbar, die jeweils verhindern, dass das durch die erste Verdichtungsstufe 5 vorverdichtete Druckmittel L2 das Sperrventil 26 im offenen Betriebsmodus BMo umschaltet.

In welchem Maße bzw. bis zu welchem Grenzdruck pG bzw. bis zu welchem Grenz-Volumenstrom QG das Sperrventil 26 die vorverdichtete Luft L2 aus dem ersten Verdichtungsraum 5.2 in das Zwischenvolumen 13 fördert, ist abhängig von der Auslegung des Sperrventils 26, insbesondere einem Ventilquerschnitt VQ. Hierbei kann zum einen bei einem hohen Ventilquerschnitt VQ von beispielsweise 1mm eine vollständige Abschaltung der ersten Verdichtungsstufe 5 erreicht werden, bei der die vorverdichtete Luft L2 bei geöffnetem Sperrventil 26 vollständig über dieses in die Entlüftungsleitung 25 abgeführt wird und daher keine Förderung in das Zwischenvolumen 13 stattfindet, d. h. der Grenzdruck pG beträgt 0 bar absolut bzw. der Grenz-Volumenstrom QG ist auf eine Durchflussrate von Null eingstellt. Andererseits kann vorgesehen sein, dass bei einem geringen Ventilquerschnitt VQ von beispielsweise 0.8mm und geöffnetem Sperrventil 26 nur ein festgelegter Teil der vorverdichteten Luft L2 in die Entlüftungsleitung 25 entweichen kann und der übrige Teil von der ersten Verdichtungsstufe 5 in das Zwischenvolumen 13 gefördert wird. Die erste Verdichtungsstufe 5 trägt in diesem Fall also zu einem Teil noch zur Gesamt-Verdichtungsleistung des Kompressors 4 bei.

Ist für die erste Verdichtungsstufe 5 im geschlossenen Betriebsmodus BMc lediglich eine Reduzierung der Verdichtungsleistung auf größer Null vorgesehen, d.h. von der ersten Verdichtungsstufe 5 wird ein vorverdichtetes Druckmittel L2 mit einem Zwischen-Volumenstrom Q2 in das Zwischenvolumen 13 eingeleitet, befindet sich im Zwischenvolumen 13 ein Mixdruckmittel L6, in dem anteilig das Aufladedruckmittel A sowie das vorverdichtete Druckmittel L2 vorhanden sind. Das Mixdruckmittel L6 wird mit einem Mixdruck p6 sowie einem Mix-Volumenstrom QM, die durch die jeweiligen Drücke pA, p2 bzw. Volumenströme QS, Q2 des Aufladedruckmittels A bzw. des vorverdichteten Druckmittels L2 gegeben sind, in die zweite Verdichtungsstufe 6 gefördert.

Ist die erste Verdichtungsstufe 5 im geschlossenen Betriebsmodus BMc jedoch vollständig abgeschaltet, wird aus dem Zwischenvolumen 13 lediglich das Aufladedruckmittel A mit dem Aufladedruck pA sowie dem Speicher-Volumenstrom QS in die zweite Verdichtungsstufe 6 eingeleitet. Das Mixdruckmittel L6 besteht somit ausschließlich aus dem Aufladedruckmittel A mit dem Aufladedruck pA ohne einen Anteil an vorverdichteter Luft L2 aus der ersten Verdichtungsstufe 5.

Im offenen Betriebsmodus BMo hingegen wird lediglich die vorverdichtete Luft L2 mit dem Zwischendruck p2 und dem Zwischen-Volumenstrom Q2 durch das Zwischenvolumen 13 in die zweite Verdichtungsstufe 6 gefördert, ohne dass es zu einer Mischung mit dem Aufladedruckmittel A kommt. Das Mixdruckmittel L6 besteht somit ausschließlich aus der vorverdichteten Luft L2 mit dem Zwischendruck p2 und dem Zwischen-Volumenstrom Q2.

Alternativ kann das Sperrventil 26 gemäß Fig. 1b auch als ein 2/2-Proportionalitätsventil 126 ausgebildet sein, das je nach anliegendem Steuerdruck pS sowie Ventilquerschnitt VQ an dem pneumatischen Steuereingang 26.1 nur einen Teil der vorverdichteten Luft L2 in die Entlüftungsleitung 25 abführt - ohne Zusatzventil 24 erst dann, wenn der Öffnungsdruck pO erreicht ist - und somit variabel eingestellt werden kann, wie stark die Verdichtungsleistung der ersten Verdichtungsstufe 5 im geschlossenen Betriebsmodus BMc beschränkt wird.

Dadurch kann im geschlossenen Betriebsmodus BMc eine Leistungsbegrenzung erreicht werden, mit der der Energiebedarf des Kompressors 4 variabel angepasst oder minimiert werden kann, da eine Vorverdichtung der Ansaugluft L1 auf den in diesem Fall im Zwischenvolumen 13 vorherrschenden Aufladedruck pA verhindert wird. Die benötigte Leistungsaufnahme des Motors 7 des Kompressors 4 wird somit begrenzt, da der erste Kolben 8 weniger Verdichtungsarbeit zu verrichten hat. Dies kann zur Optimierung der zweiten Verdichtungsstufe 6 genutzt werden, so dass eine optimale Abstimmung insbesondere eines End-Volumenstroms QE der zweiten Verdichtungsstufe 6, einer oberen Energiebegrenzung oE des Kompressors 4 sowie eines Kolbendurchmesser D2 der zweiten Verdichtungsstufe 6 erfolgen kann.

Gemäß Fig. 2 ist der mehrstufige Kolbenkompressor 4 mit der ersten und der zweiten Verdichtungsstufe 5, 6 in einer schematischen Ansicht dargestellt, die der in Fig. 1a dargestellten Ausführungsform mit einem Zusatzventil 24 und einem pneumatischen 2/2-Wegeventil als Sperrventil 26 entspricht. Die beiden Verdichtungsstufen 5, 6 sind über das Zwischenvolumen 13 miteinander verbunden, so dass die in der ersten Verdichtungsstufe 5 durch den ersten Kolben 8 vorverdichtete Luft L2 insbesondere im offenen Betriebsmodus BMo in die zweite Verdichtungsstufe 6 gefördert werden kann, um dort vom zweiten Kolben 9 weiter verdichtet zu werden.

Im geschlossenen Betriebsmodus BMc wird über die Speicherleitung 23 das Aufladedruckmittel A in das Zwischenvolumen 13 sowie über die Steuerleitung 26.2 an den Steuereingang 26.1 des Sperrventils 26 geleitet. Das pneumatische Sperrventil 26, die zugehörigen Übertragungsleitungen 23, 26.2, das Zusatzventil 24 sowie die Entlüftungsleitung 25 können platzsparend beispielsweise im Kompressordeckel 28 des Kompressorgehäuses 29 angeordnet werden.

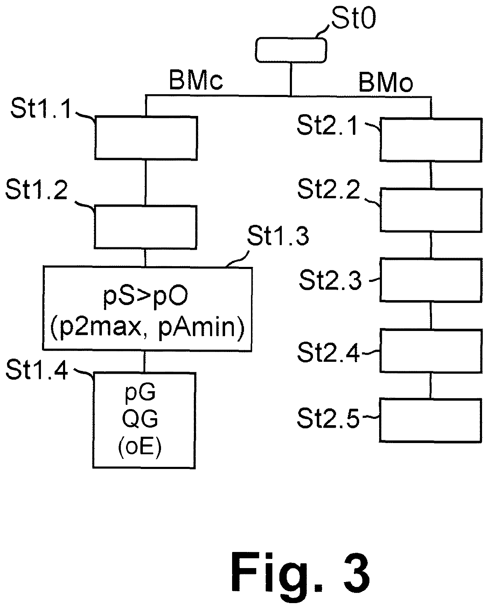

Gemäß Fig. 3 kann das erfindungsgemäße Verfahren zum Betreiben der Luftfederanlage im geschlossenen Betriebsmodus BMc wie folgt durchgeführt werden:
In einem anfänglichen Schritt St0 wird überprüft, welcher Betriebsmodus BMo, BMc der Druckregelanlage eingestellt ist.

Ist der geschlossenen Betriebsmodus BMc der Druckregelanlage 1 eingestellt, wird das Aufladedruckmittel A in einem ersten Schritt St1.1 über das jeweilige Schaltventil 22a, 22b freigegeben und über die Speicherleitung 23 in das Zwischenvolumen 13 eingelassen, von dem es über die zweite Verdichtungsstufe 6 erneut verdichtet wird. Über das Auslassventil 12 wird ein Einströmen in die erste Verdichtungsstufe 5 verhindert.

Gleichzeitig gelangt das Aufladedruckmittel A in einem zweiten Schritt St1.2 über die Steuerleitung 26.2 an den Steuereingang 26.1 des Sperrventils 26. Anschließend wird in einem dritten Schritt St1.3 das Sperrventil 26 in Abhängigkeit des am Steuereingang 26.1 anliegenden Steuerdruckes pS umgeschaltet, falls der Steuerdruck pS größer als der Öffnungsdruck pO ist. Der Öffnungsdruck pO kann hierbei derartig gewählt werden, dass das Zusatzventil 24, das im offenen Betriebsmodus BMo verhindert, dass das Sperrventil 26 durch das vorverdichtete Druckmittel L2 bereits öffnet, entfallen kann. Dazu ist der Öffnungsdruck pO höher zu wählen als ein maximal erreichbarer Zwischendruck p2max, der durch die erste Verdichtungsstufe 5 zu erreichen ist. Weiterhin ist ein minimaler Aufladedruck pAmin des Aufladedruckmittels A zu berücksichtigen, so dass im offenen Betriebsmodus BMo ein unbeabsichtiges Öffnen des Sperrventils 26 und im geschlossenen Betriebsmodus BMc ein garantiertes Öffnen des Sperrventils 26 und somit eine Leistungsreduktion gewährleistet werden kann.

Dadurch wird in einem vierten Schritt St1.4 das von der ersten Verdichtungsstufe 5 vorverdichtete Druckmittel L2 zumindest anteilig in die Ansaugleitung 10 oder die Atmosphäre 100 abgeleitet. Dadurch wird das vorverdichtete Druckmittel L2 nur in einem bestimmten Umfang in das Zwischenvolumen 13 gefördert und somit die Verdichtungsleistung der ersten Verdichtungsstufe 5 begrenzt, indem der Zwischendruck p2 auf den Grenzdruck pG und/oder der Zwischen-Volumenstrom Q2 auf den Grenz-Volumenstrom QG beschränkt wird. Ist ein vollständiges Abschalten der ersten Verdichtungsstufe 5 gewollt, gelangt bei entsprechender Auslegung des Ventilquerschnitts VQ des Sperrventils 26, kein vorverdichtetes Druckmittel L2 aus der ersten Verdichtungsstufe 5 in das Zwischenvolumen 13 und die Leistungsaufnahme der ersten Verdichtungsstufe 5 ist auf Reibungsverluste begrenzt, pG und Q2 sind somit in etwa Null. Dieser Energiegewinn kann zur optimalen Abstimmung der zweiten Verdichtungsstufe 6 verwendet werden.

Die Begrenzung der Verdichtungsleistung im vierten Schritt St1.4 kann hierbei beispielsweise auch in Abhängigkeit einer oberen Energiebegrenzung oE erfolgen, so dass bei Überschreiten der oberen Energiebegrenzung oE ein größerer Anteil des vorverdichteten Druckmittels L2 in die Entlüftungsleitung 25 abgelassen wird, so dass die Leistungsaufnahme der ersten Verdichtungsstufe 5 und daher auch der Energieverbrauch des Kompressors 4 sinkt.

Im offenen Betriebsmodus BMo gelangt die Ansaugluft L1 aus der Atmosphäre 100 in einem Schritt St2.1 in die erste Verdichtungsstufe 5. In der ersten Verdichtungsstufe 5 wird die Ansaugluft L1 in einem zweiten Schritt St2.2 auf den Zwischendruck p2 vorverdichtet und in einem dritten Schritt St2.3 in das Zwischenvolumen 13 eingelassen. Aus dem Zwischenvolumen 13 gelangt das vorverdichtete Druckmittel L2 in die zweite Verdichtungsstufe 6, in der in einem vierten Schritt St2.4 eine erneute Verdichtung auf den Enddruck p3 stattfindet. In einem abschließenden Schritt St2.5 gelangt das verdichtete Druckmittel L3 in die Druckmittelkammern 3.i oder den Druckmittelvorrat 20.

### Bezugszeichenliste (Teil der Beschreibung)

- 1: Luftfederanlage
- 3.i: Druckmittelkammern
- 4: zweistufiger Kompressor
- 5: erste Verdichtungsstufe
- 5.1: erster Ansaugraum
- 5.2: erster Verdichtungsraum
- 6: zweite Verdichtungsstufe
- 6.1: zweiter Ansaugraum
- 6.2: zweiter Verdichtungsraum
- 7: Motor
- 8: erster Kolben der ersten Verdichtungsstufe
- 9: zweiter Kolben der zweiten Verdichtungsstufe
- 10: Ansaugleitung
- 11: erstes Einlassventil
- 12: erstes Auslassventil
- 13: Zwischenvolumen
- 14: zweites Einlassventil
- 15: zweites Auslassventil
- 16: Auslassleitung
- 17: Lufttrockner
- 18: Düse
- 19: Vorratsleitung
- 20: Druckmittelvorrat
- 21.i: steuerbare Ventile
- 22a: erstes Schaltventil
- 22b: zweites Schaltventil
- 23: Speicherleitung
- 24: Zusatzventil
- 25: Entlüftungsleitung
- 26: Sperrventil (Wegeventil)
- 26.1: Steuereingang
- 26.2: Steuerleitung
- 27: Feder
- 28: Kompressordeckel
- 29: Kompressorgehäuse
- 30: Druckmessgerät
- 31: Ablassventil

- 100: Atmosphäre
- 126: Sperrventil (Proportionalitätsventil)
- 200: Fahrzeug

- A: Aufladedruckmittel
- BMo: offener Betriebsmodus
- BMc: geschlossener Betriebsmodus
- L1: Ansaugluft
- L2: vorverdichtete Luft
- L3: verdichtete Luft
- L4: gespeicherte Luft
- L5: Kammerluft
- L6: Mixdruckmittel
- oE: obere Energiebegrenzung
- NW: Nennweite
- pA: Aufladedruck
- pAmin: minimaler Aufladedruck
- p1: Luftdruck/Ansaugdruck
- p2: Zwischendruck
- p2max: maximaler Zwischendruck
- p3: Enddruck
- p4: Vorratsdruck
- p6: Mixdruck
- pG: Grenzdruck
- pO: Öffnungsdruck
- pS: Steuerdruck
- VQ: Ventilquerschnitt
- Q1: Ansaug-Volumenstrom
- Q2: Zwischen-Volumenstrom
- QE: End-Volumenstrom
- QG: Grenz-Volumenstrom
- QS: Speicher-Volumenstrom
- QM: Mix-Volumenstrom

- St1.1, St1.2, St1.3, St1.4: Schritte des Verfahrens im BMc
- St2.1, St2.2, St2.3, St2.4, St2.5: Schritte des Verfahrens im BMo

## Patentansprüche

1. Verfahren zum Betreiben einer Druckregelanlage (1), insbesondere für Fahrzeuge (200), mit einem mehrstufigen Kompressor (4),
wobei von dem mehrstufigen Kompressor (4) ein mehrfach verdichtetes Druckmittel (L3) zum Befüllen eines Druckmittelvorrats (20) oder von Druckmittelkammern (3.i; i=1,...4) der Druckregelanlage (1) bereitgestellt wird (St1.1, St2.5), wobei dazu
- von einer ersten Verdichtungsstufe (5) ein vorverdichtetes Druckmittel (L2) bereitgestellt wird, das mindestens über eine zweite Verdichtungsstufe (6) zusätzlich verdichtet wird (St1.4, St2.3, St2.4) und ein bereits verdichtetes Aufladedruckmittel (A) in ein Zwischenvolumen (13) zwischen der ersten Verdichtungsstufe (5) und der zweiten Verdichtungsstufe (6) des mehrstufigen Kompressors (4) eingeleitet wird und das Aufladedruckmittel (A) zumindest von der zweiten Verdichtungsstufe (6) erneut verdichtet wird (St1.1), oder
- ein bereits verdichtetes Aufladedruckmittel (A) in ein Zwischenvolumen (13) zwischen der ersten Verdichtungsstufe (5) und der zweiten Verdichtungsstufe (6) des mehrstufigen Kompressors (4) eingeleitet wird und das Aufladedruckmittel (A) zumindest von der zweiten Verdichtungsstufe (6) erneut verdichtet wird (St1.1),
**dadurch gekennzeichnet, dass** das Aufladedruckmittel (A) gleichzeitig über eine Steuerleitung (26.2) zu einem Steuereingang (26.1) eines mit der ersten Verdichtungsstufe (5) zusammenwirkenden Sperrventils (26) gelangt (St1.2), so dass ein Aufladedruck (pA) des Aufladedruckmittels (A) einen Steuerdruck (pS) des Sperrventils (26) vorgibt, wobei über das Sperrventil (26) eine vom Steuerdruck (pS) abhängige Druckbegrenzung (pG) und/oder Volumenstrombegrenzung (QG) des von der ersten Verdichtungsstufe (5) in das Zwischenvolumen (13) geförderten vorverdichteten Druckmittels (L2) eingestellt wird (St1.3) zum selbsttätigen Anpassen der Verdichtungsleistung der ersten Verdichtungsstufe (5) durch das in der Steuerleitung (26.2) befindliche Aufladedruckmittel (A).

2. Verfahren nach Anspruch 1, **dadurch gekennzeichnet, dass** das vorverdichtete Druckmittel (L2) zumindest anteilig über das Sperrventil (26) in eine Entlüftungsleitung (25) abgeleitet wird zum Ausbilden der Druckbegrenzung (pG) und/oder der Volumenstrombegrenzung (QG) des von der ersten Verdichtungsstufe (5) geförderten vorverdichteten Druckmittels (L2).

3. Verfahren nach Anspruch 2, **dadurch gekennzeichnet, dass** der Anteil des von dem Sperrventil (26) in die Entlüftungsleitung (25) abgeleiteten vorverdichteten Druckmittels (L2) in Abhängigkeit des Steuerdruckes (pS) stufenlos eingestellt wird.

4. Verfahren nach Anspruch 2 oder 3, **dadurch gekennzeichnet, dass** bei einem anteiligen Ableiten des vorverdichteten Druckmittels (L2) in die Entlüftungsleitung (25), ein druckbegrenztes (pG) und/oder volumenstrombegrenztes (QG) vorverdichtetes Druckmittel (L2) aus der ersten Verdichtungsstufe (5) sowie gleichzeitig das Aufladedruckmittel (A) in das Zwischenvolumen (13) gelangt, so dass sich im Zwischenvolumen ein Mixdruckmittel (L6) aus dem Aufladedruckmittel (A) und dem vorverdichteten Druckmittel (L2) befindet, und von dem mehrstufigen Kompressor (4) somit ein durch die zweite Verdichtungsstufe (6) verdichtetes Druckmittel (L3) bereitgestellt wird, das sowohl aus einer Verdichtung des Aufladedruckmittels (A) als auch einer Verdichtung des druckbegrenzten (pG) und/oder volumenstrombegrenzten (QG) vorverdichteten Druckmittels (L2) aus der ersten Verdichtungsstufe (5) gewonnen wird.

5. Verfahren nach einem der Ansprüche 2 bis 4, **dadurch gekennzeichnet, dass** der Anteil des von dem Sperrventil (26) in die Entlüftungsleitung (25) abgelassenen vorverdichteten Druckmittels (L2) weiterhin in Abhängigkeit einer oberen Energiebegrenzung (oE) des mehrstufigen Kompressors (4) eingestellt wird, wobei bei einem Überschreiten der oberen Energiebegrenzung (oE) der Anteil des abgelassenen vorverdichteten Druckmittels (L2) erhöht wird.

6. Verfahren nach Anspruch 2, **dadurch gekennzeichnet, dass** das Sperrventil (26) in Abhängigkeit des Steuerdruckes (pS) entweder vollständig geöffnet oder vollständig geschlossen wird.

7. Verfahren nach Anspruch 6, **dadurch gekennzeichnet, dass** das vorverdichtete Druckmittel (L2) bei vollständig geöffnetem Sperrventil (26) vollständig in die Entlüftungsleitung (25) abgelassen wird, so dass kein vorverdichtetes Druckmittel (L2) aus der ersten Verdichtungsstufe (5) in das Zwischenvolumen (13) gelangt, wobei dadurch die erste Verdichtungsstufe (5) abgeschaltet wird, und von dem mehrstufigen Kompressor (4) somit ein mehrfach verdichtetes Druckmittel (L3) bereitgestellt wird, das ausschließlich aus einer Verdichtung des Aufladedruckmittels (A) in der zweiten Verdichtungsstufe (6) gewonnen wird zum Verringern des Energieverbrauchs des Kompressors (4).

8. Verfahren nach einem der vorhergehenden Ansprüche, **dadurch gekennzeichnet, dass** das Aufladedruckmittel (A) durch Öffnen eines steuerbaren Schaltventils (22a, 22b) in die Speicherleitung (23) eingelassen wird, wobei das Aufladedruckmittel (A) bei einem Öffnen des Schaltventils (22a, 22b) sowohl in das Zwischenvolumen (13) als auch an den Steuereingang (26.1) des Sperrventils (26) geleitet wird.

9. Druckregelanlage (1), insbesondere für ein Fahrzeug (200), mindestens aufweisend:
einen mehrstufigen Kompressor (4) mit einer ersten Verdichtungsstufe (5) zum Bereitstellen eines vorverdichten Druckmittels (L2) und mindestens einer zweiten Verdichtungsstufe (6) zum Bereitstellen eines verdichteten Druckmittels (L3), wobei die erste Verdichtungsstufe (5) und die zweite Verdichtungsstufe (6) über ein Zwischenvolumen (13) miteinander verbunden sind zum Fördern des vorverdichteten Druckmittels (L2) über das Zwischenvolumen (13) in die zweite Verdichtungsstufe (6),
mindestens eine mit der zweiten Verdichtungsstufe (6) verbundene Druckmittelkammer (3.i; i=1...4),
einen mit der zweiten Verdichtungsstufe (6) verbundenen Druckmittelvorrat (20) zum Speichern des verdichteten Druckmittels (L3),
eine Speicherleitung (23), die den Druckmittelvorrat (20) oder die mindestens eine Druckmittelkammer (3.i) mit dem Zwischenvolumen (13) verbindet, zum Betreiben der Druckregelanlage (1) mit in dem Druckmittelvorrat (20) gespeichertem Druckmittel (L4) oder zum Rückführen eines in den Druckmittelkammern (3.i) genutzten Kammerdruckmittels (L5) in den Druckmittelvorrat (20), und
ein Sperrventil (26), wobei das Sperrventil (26) derartig mit der ersten Verdichtungsstufe (5) zusammenwirkt, dass in Abhängigkeit der Ansteuerung des Sperrventils (26) eine Druckbegrenzung (pG) und/oder eine Volumenstrombegrenzung (QG) des von der ersten Verdichtungsstufe (5) in das Zwischenvolumen (13) geförderten vorverdichteten Druckmittels (L2) erreichbar ist zum Anpassen einer Verdichtungsleistung der ersten Verdichtungsstufe (5),
**dadurch gekennzeichnet, dass**
von der Speicherleitung (23) eine Steuerleitung (26.2) zu einem pneumatischen Steuereingang (26.1) des Sperrventils (26) abzweigt, so dass das gespeicherte Druckmittel (L4) oder das Kammerdruckmittel (L5) als Aufladedruckmittel (A) dem Zwischenvolumen (13) sowie gleichzeitig über die Steuerleitung (26.2) dem Steuereingang (26.1) des Sperrventils (26) als Steuerdruck (pS) zuführbar ist zum selbstregulierenden pneumatischen Ansteuern des Sperrventils (26) durch das in der Steuerleitung (26.2) befindliche Aufladedruckmittel (A),
wobei weiterhin eine Sperrfunktion (24, pO) vorgesehen ist, die verhindert, dass das von der ersten Verdichtungsstufe (5) vorverdichtete Druckmittel (L2) über das Zwischenvolumen (13) und die Steuerleitung (26.2) das Sperrventil (26) für die Druckbegrenzung (pG) und/oder die Volumenstrombegrenzung (QG) umschaltet.

10. Druckregelanlage (1) nach Anspruch 9, **dadurch gekennzeichnet, dass** eine von der ersten Verdichtungsstufe (5) abzweigende Entlüftungsleitung (25) derartig angeordnet ist, dass das von der ersten Verdichtungsstufe (5) vorverdichtete Druckmittel (L2) in Abhängigkeit des Steuerdruckes (pS) über die Entlüftungsleitung (25) zumindest anteilig in eine Ansaugleitung (10) oder eine Atmosphäre (100) ableitbar ist zur Druckbegrenzung (pG) und/oder Volumenstrombegrenzung (QG) des von der ersten Verdichtungsstufe (5) in das Zwischenvolumen (13) geförderten vorverdichteten Druckmittels (L2).

11. Druckregelanlage (1) nach Anspruch 10, **dadurch gekennzeichnet, dass** die Entlüftungsleitung (25) zwischen einem ersten Auslassventil (12) und einem ersten Verdichtungsraum (5.2) der ersten Verdichtungsstufe (5) abzweigt.

12. Druckregelanlage (1) nach Anspruch 10 oder 11, **dadurch gekennzeichnet, dass** die Entlüftungsleitung (25) in eine Ansaugleitung (10) oder eine Atmosphäre (100) mündet zum Ablassen des vorverdichteten Druckmittels (L2) in die Ansaugleitung (10) oder die Atmosphäre (100).

13. Druckregelanlage (1) nach einem der Ansprüche 9 bis 12, **dadurch gekennzeichnet, dass** die Sperrfunktion durch ein zwischen dem Zwischenvolumen (13) und dem Sperrventil (26) angeordnetes Überdruckventil (24), beispielsweise einem Rückschlagventil (24), gewährleistet ist.

14. Druckregelanlage (1) nach einem der Ansprüche 9 bis 13, **dadurch gekennzeichnet, dass** die Sperrfunktion durch einen Öffnungsdruck (pO) des Sperrventils (26) ausgebildet ist, wobei der Öffnungsdruck (pO) den Druck angibt, ab dem das Sperrventil (26) in eine zumindest teilweise geöffnete Stellung übergeht,
wobei der Öffnungsdruck (pO) größer ist als ein maximaler Zwischendruck (p2max) des von der ersten Verdichtungsstufe (5) vorverdichteten Druckmittels (L2) und niedriger als oder gleich einem minimalen Aufladedruck (pAmin) des Aufladedruckmittels (A),
wobei der maximale Zwischendruck (p2max) und der minimale Aufladedruck (pAmin) durch eine entsprechende Auslegung des mehrstufigen Kompressors (4) aufeinander abgestimmt sind.

15. Druckregelanlage (1) nach einem der Ansprüche 9 bis 14, **dadurch gekennzeichnet, dass** in der Speicherleitung (23) ein erstes steuerbares Schaltventil (22a) vorgesehen ist zum Freigeben des gespeicherten Druckmittels (L4) als Aufladedruckmittel (A) und ein zweites steuerbares Schaltventil (22b) zum Freigeben des Kammerdruckmittels (L5) als Aufladedruckmittel (A), wobei das freigegebene Aufladedruckmittel (A) aus der Speicherleitung (23) in das Zwischenvolumen (13) sowie an den Steuereingang (26.1) des Sperrventils (26) gelangt.

16. Druckregelanlage (1) nach Anspruch 15, **dadurch gekennzeichnet, dass** eine Nennweite (NW) der Schaltventile (22a, 22b) zwischen 1mm und 4mm beträgt zum Erhöhen eines Speicher-Volumenstroms (QS) in das erste Zwischenvolumen (13) und eines End-Volumenstroms (QE) aus der zweiten Verdichtungsstufe (6).

17. Druckregelanlage (1) nach einem der Ansprüche 9 bis 16, **dadurch gekennzeichnet, dass** das Sperrventil (26) als pneumatisches Wegeventil mit einer Feder (27) ausgeführt ist zur stufenweisen Druckbegrenzung (pG) und/oder Volumenstrombegrenzung (QG) des vorverdichteten Druckmittels (L2).

18. Druckregelanlage (1) nach einem der Ansprüche 9 bis 16, **dadurch gekennzeichnet, dass** das Sperrventil (26) als pneumatisches Proportionalitätsventil (126) ausgeführt ist zur stufenlosen Druckbegrenzung (pG) und/oder Volumenstrombegrenzung (QG) des vorverdichteten Druckmittels (L2).

19. Druckregelanlage (1) nach einem der Ansprüche 9 bis 18, **dadurch gekennzeichnet, dass** das Sperrventil (26) sowie Komponenten (24) der Sperrfunktion (24, pO) in einem Kompressorgehäuse (29), beispielsweise einem Kompressordeckel (28), des mehrstufigen Kompressors (4) integriert sind.

20. Druckregelanlage (1) nach einem der Ansprüche 9 bis 19, **dadurch gekennzeichnet, dass** die Druckregelanlage (1) eine Luftfederanlage (1) in einem Fahrzeug (200), insbesondere einem Personenkraftwagen (200), ist.

21. Fahrzeug (200), insbesondere Personenkraftwagen (200), mit einer Druckregelanlage (1) nach einem der Ansprüche 9 bis 20 zur Durchführung des Verfahrens nach einem der Ansprüche 1 bis 8.

## Claims

1. Method for operating a pressure control system (1), in particular for vehicles (200), having a multi-stage compressor (4),
wherein a multiply compressed pressure medium (L3) is provided (St1.1, St2.5) by the multi-stage compressor (4) for the purposes of filling a pressure medium reservoir (20) or pressure medium chambers (3.i; i=1,...4) of the pressure control system (1), wherein, for this purpose,
- a pre-compressed pressure medium (L2) is provided by a first compression stage (5), which pre-compressed pressure medium is additionally compressed (St1.4, St2.3, St2.4) at least by means of a second compression stage (6), and an already-compressed charging pressure medium (A) is introduced into an intermediate volume (13) between the first compression stage (5) and the second compression stage (6) of the multi-stage compressor (4), and the charging pressure medium (A) is compressed again (St1.1) at least by the second compression stage (6), or
- an already-compressed charging pressure medium (A) is introduced into an intermediate volume (13) between the first compression stage (5) and the second compression stage (6) of the multi-stage compressor (4), and the charging pressure medium (A) is compressed again (St1.1) at least by the second compression stage (6),
**characterized in that**
the charging pressure medium (A) simultaneously passes (St1.2) via a control line (26.2) to a control input (26.1) of a shut-off valve (26) that interacts with the first compression stage (5), such that a charging pressure (pA) of the charging pressure medium (A) predefines a control pressure (pS) of the shut-off valve (26), wherein, by means of the shut-off valve (26), a pressure limitation (pG) and/or volume flow limitation (QG), dependent on the control pressure (pS), of the pre-compressed pressure medium (L2) conveyed by the first compression stage (5) into the intermediate volume (13) is set (St1.3) for the purposes of automatically adapting the compression power of the first compression stage (5) by means of the charging pressure medium (A) situated in the control line (26.2) .

2. Method according to Claim 1, **characterized in that** the pre-compressed pressure medium (L2) is at least proportionally diverted by the shut-off valve (26) into a ventilation line (25) in order to generate the pressure limitation (pG) and/or the volume flow limitation (QG) of the pre-compressed pressure medium (L2) conveyed by the first compression stage (5) .

3. Method according to Claim 2, **characterized in that** the fraction of the pre-compressed pressure medium (L2) that is diverted by the shut-off valve (26) into the ventilation line (25) is set in continuously variable fashion in a manner dependent on the control pressure (pS).

4. Method according to Claim 2 or 3, **characterized in that**, in the case of a proportional diversion of the pre-compressed pressure medium (L2) into the ventilation line (25), a pressure-limited (pG) and/or volume-flow-limited (QG) pre-compressed pressure medium (L2) passes out of the first compression stage (5) and at the same time the charging pressure medium (A) passes into the intermediate volume (13), such that a mixed pressure medium (L6) composed of the charging pressure medium (A) and the pre-compressed pressure medium (L2) is situated in the intermediate volume, and the multi-stage compressor (4) thus provides a pressure medium (L3) which has been compressed by the second compression stage (6) and which is obtained both from a compression of the charging pressure medium (A) and from a compression of the pressure-limited (pG) and/or volume-flow-limited (QG) pre-compressed pressure medium (L2) from the first compression stage (5).

5. Method according to any of Claims 2 to 4, **characterized in that** the fraction of the pre-compressed pressure medium (L2) discharged by the shut-off valve (26) into the ventilation line (25) is furthermore set in a manner dependent on an upper energy limit (oE) of the multi-stage compressor (4), wherein, in the event of the upper energy limit (oE) being overshot, the fraction of discharged pre-compressed pressure medium (L2) is increased.

6. Method according to Claim 2, **characterized in that** the shut-off valve (26) is either fully opened or fully closed in a manner dependent on the control pressure (pS) .

7. Method according to Claim 6, **characterized in that** the pre-compressed pressure medium (L2) is, in the case of a fully opened shut-off valve (26), discharged entirely into the ventilation line (25), such that no pre-compressed pressure medium (L2) passes from the first compression stage (5) into the intermediate volume (13), wherein the first compression stage (5) is thus deactivated, and the multi-stage compressor (4) thus provides a multiply compressed pressure medium (L3) which is obtained exclusively from a compression of the charging pressure medium (A) in the second compression stage (6), in order to reduce the energy consumption of the compressor (4).

8. Method according to any of the preceding claims, **characterized in that** the charging pressure medium (A) is admitted into the store line (23) by opening of a controllable switching valve (22a, 22b), wherein the charging pressure medium (A), in the event of the switching valve (22a, 22b) being opened, is conducted both into the intermediate volume (13) and to the control input (26.1) of the shut-off valve (26) .

9. Pressure control system (1), in particular for a vehicle (200), at least having: a multi-stage compressor (4) with a first compression stage (5) for providing a pre-compressed pressure medium (L2) and with at least one second compression stage (6) for providing a compressed pressure medium (L3), wherein the first compression stage (5) and the second compression stage (6) are connected to one another via an intermediate volume (13) for the purposes of conveying the pre-compressed pressure medium (L2) via the intermediate volume (13) into the second compression stage (6),
at least one pressure medium chamber (3.i; i=1...4) which is connected to the second compression stage (6),
a pressure medium reservoir (20) which is connected to the second compression stage (6) and which serves for storing the compressed pressure medium (L3),
a store line (23) which connects the pressure medium reservoir (20) or the at least one pressure medium chamber (3.i) to the intermediate volume (13), for the purposes of operating the pressure control system (1) with pressure medium (L4) stored in the pressure medium reservoir (20) or for the purposes of returning a chamber pressure medium (L5) used in the pressure medium chambers (3.i) into the pressure medium reservoir (20), and
a shut-off valve (26), wherein the shut-off valve (26) interacts with the first compression stage (5) such that, in a manner dependent on the actuation of the shut-off valve (26), a pressure limitation (pG) and/or a volume flow limitation (QG) of the pre-compressed pressure medium (L2) conveyed by the first compression stage (5) into the intermediate volume (13) can be achieved for the purposes of adapting a compression power of the first compression stage (5),
**characterized in that**
a control line (26.2) to a pneumatic control input (26.1) of the shut-off valve (26) branches off from the store line (23) such that the stored pressure medium (L4) or the chamber pressure medium (L5) can be fed as charging pressure medium (A) to the intermediate volume (13) and simultaneously via the control line (26.2) to the control input (26.1) of the shut-off valve (26) as control pressure (pS) for the purposes of self-regulating pneumatic actuation of the shut-off valve (26) by means of the charging pressure medium (A) situated in the control line (26.2),
wherein, furthermore, a shut-off function (24, pO) is provided which prevents the pressure medium (L2) pre-compressed by the first compression stage (5) from switching, via the intermediate volume (13) and the control line (26.2), the shut-off valve (26) for the pressure limitation (pG) and/or the volume flow limitation (QG).

10. Pressure control system (1) according to Claim 9, **characterized in that** a ventilation line (25) that branches off from the first compression stage (5) is arranged such that the pressure medium (L2) pre-compressed by the first compression stage (5) can, in a manner dependent on the control pressure (pS), be at least proportionally diverted via the ventilation line (25) into an intake line (10) or an atmosphere (100) for the purposes of pressure limitation (pG) and/or volume flow limitation (QG) of the pre-compressed pressure medium (L2) conveyed by the first compression stage (5) into the intermediate volume (13).

11. Pressure control system (1) according to Claim 10, **characterized in that** the ventilation line (25) branches off between a first outlet valve (12) and a first compression space (5.2) of the first compression stage (5).

12. Pressure control system (1) according to Claim 10 or 11, **characterized in that** the ventilation line (25) opens into an intake line (10) or an atmosphere (100) for the purposes of discharging the pre-compressed pressure medium (L2) into the intake line (10) or the atmosphere (100).

13. Pressure control system (1) according to any of Claims 9 to 12, **characterized in that** the shut-off function is ensured by means of an overpressure valve (24), for example a check valve (24), arranged between the intermediate volume (13) and the shut-off valve (26).

14. Pressure control system (1) according to any of Claims 9 to 13, **characterized in that** the shut-off function is formed by an opening pressure (pO) of the shut-off valve (26), wherein the opening pressure (pO) indicates the pressure above which the shut-off valve (26) moves into an at least partially opened position,
wherein the opening pressure (pO) is higher than a maximum intermediate pressure (p2max) of the pressure medium (L2) pre-compressed by the first compression stage (5) and lower than or equal to a minimum charging pressure (pAmin) of the charging pressure medium (A),
wherein the maximum intermediate pressure (p2max) and the minimum charging pressure (pAmin) are coordinated with one another through corresponding configuration of the multi-stage compressor (4).

15. Pressure control system (1) according to any of Claims 9 to 14, **characterized in that**, in the store line (23), there is provided a first controllable switching valve (22a) for the purposes of releasing the stored pressure medium (L4) as charging pressure medium (A) and a second controllable switching valve (22b) for the purposes of releasing the chamber pressure medium (L5) as charging pressure medium (A), wherein the released charging pressure medium (A) passes from the store line (23) into the intermediate volume (13) and to the control input (26.1) of the shut-off valve (26).

16. Pressure control system (1) according to Claim 15, **characterized in that** a nominal diameter (NW) of the switching valves (22a, 22b) amounts to between 1 mm and 4 mm for the purposes of increasing a store volume flow (QS) into the first intermediate volume (13) and a final volume flow (QE) out of the second compression stage (6).

17. Pressure control system (1) according to any of Claims 9 to 16, **characterized in that** the shut-off valve (26) is designed as a pneumatic directional valve with a spring (27) for the purposes of stepped pressure limitation (pG) and/or volume flow limitation (QG) of the pre-compressed pressure medium (L2).

18. Pressure control system (1) according to any of Claims 9 to 16, **characterized in that** the shut-off valve (26) is designed as a pneumatic proportional valve (126) for the purposes of continuously variable pressure limitation (pG) and/or volume flow limitation (QG) of the pre-compressed pressure medium (L2).

19. Pressure control system (1) according to any of Claims 9 to 18, **characterized in that** the shut-off valve (26) and components (24) of the shut-off function (24, pO) are integrated in a compressor casing (29), for example a compressor cover (28), of the multi-stage compressor (4).

20. Pressure control system (1) according to any of Claims 9 to 19, **characterized in that** the pressure control system (1) is an air suspension system (1) in a vehicle (200), in particular a passenger motor vehicle (200).

21. Vehicle (200), in particular passenger motor vehicle (200), having a pressure control system (1) according to any of Claims 9 to 20, for carrying out the method according to any of Claims 1 to 8.

## Revendications

1. Procédé pour faire fonctionner une installation de régulation de pression (1), en particulier pour des véhicules (200), comprenant un compresseur multi-étage (4),
le compresseur multi-étage (4) fournissant (St1.1, St2.5) un fluide sous pression (L3) comprimé à plusieurs reprises pour remplir un réservoir de fluide sous pression (20) ou des chambres à fluide sous pression (3.i ; i = 1, ... 4) de l'installation de régulation de pression (1), dans lequel à cet effet
- un premier étage de compression (5) fournit un fluide sous pression précomprimé (L2) qui est comprimé en plus (St1.4, St2.3, St2.4) au moins par un deuxième étage de compression (6), et un fluide sous pression de suralimentation (A) déjà comprimé est introduit dans un volume intermédiaire (13) entre le premier étage de compression (5) et le deuxième étage de compression (6) du compresseur multi-étage (4), et le fluide sous pression de suralimentation (A) est à nouveau comprimé (St1.1) au moins par le deuxième étage de compression (6), ou
- un fluide sous pression de suralimentation (A) déjà comprimé est introduit dans un volume intermédiaire (13) entre le premier étage de compression (5) et le deuxième étage de compression (6) du compresseur multi-étage (4) et le fluide sous pression de suralimentation (A) est à nouveau comprimé (St1.1) au moins par le deuxième étage de compression (6),
**caractérisé en ce que** le fluide sous pression de suralimentation (A) atteint (St1.2) en même temps par une conduite de commande (26.2) une entrée de commande (26.1) d'une soupape d'arrêt (26) coopérant avec le premier étage de compression (5) de sorte qu'une pression de suralimentation (pA) du fluide sous pression de suralimentation (A) spécifie une pression de commande (pS) de la soupape d'arrêt (26), dans lequel la soupape d'arrêt (26) règle (St1.3) une limitation de pression (pG) et/ou une limitation de débit volumétrique (QG), dépendant de la pression de commande (pS), du fluide sous pression précomprimé (L2) débité par le premier étage de compression (5) dans le volume intermédiaire (13) pour une adaptation automatique de la puissance de compression du premier étage de compression (5) par le fluide sous pression de suralimentation (A) se trouvant dans la conduite de commande (26.2).

2. Procédé selon la revendication 1, **caractérisé en ce que** le fluide sous pression précomprimé (L2) est évacué au moins en partie dans une conduite de purge (25) par l'intermédiaire de la soupape d'arrêt (26) afin de réaliser la limitation de pression (pG) et/ou la limitation de débit volumétrique (QG) du fluide sous pression précomprimé (L2) débité par le premier étage de compression (5).

3. Procédé selon la revendication 2, **caractérisé en ce que** la partie du fluide sous pression précomprimé (L2) évacuée dans la conduite de purge (25) par l'intermédiaire de la soupape d'arrêt (26) est réglée en continu en fonction de la pression de commande (pS).

4. Procédé selon la revendication 2 ou 3, **caractérisé en ce que** pour une évacuation partielle du fluide sous pression précomprimé (L2) dans la conduite de purge (25), un fluide sous pression précomprimé (L2) limité en pression (pG) et/ou limité en débit volumétrique (QG) provenant du premier étage de compression (5), ainsi qu'en même temps le fluide sous pression de suralimentation (A), atteignent le volume intermédiaire (13) de sorte qu'un fluide sous pression mélangé (L6) composé du fluide sous pression de suralimentation (A) et du fluide sous pression précomprimé (L2) se trouve dans le volume intermédiaire, et le compresseur multi-étage (4) fournit donc un fluide sous pression (L3) comprimé par le deuxième étage de compression (6) qui est obtenu à la fois par une compression du fluide sous pression de suralimentation (A) et une compression du fluide sous pression précomprimé (L2) limité en pression (pG) et/ou limité en débit volumétrique (QG) provenant du premier étage de compression (5).

5. Procédé selon l'une quelconque des revendications 2 à 4, **caractérisé en ce que** la partie du fluide sous pression précomprimé (L2) vidée par la soupape d'arrêt (26) dans la conduite de purge (25) est en outre réglée en fonction d'une limitation d'énergie supérieure (oE) du compresseur multi-étage (4), dans lequel, en cas de dépassement de la limitation d'énergie supérieure (oE), la partie du fluide sous pression précomprimé (L2) vidée est augmentée.

6. Procédé selon la revendication 2, **caractérisé en ce que** la soupape d'arrêt (26) est entièrement ouverte ou entièrement fermée en fonction de la pression de commande (pS).

7. Procédé selon la revendication 6, **caractérisé en ce que** le fluide sous pression précomprimé (L2), lorsque la soupape d'arrêt (26) est entièrement ouverte, est entièrement vidé dans la conduite de purge (25) de sorte qu'aucun fluide sous pression précomprimé (L2) provenant du premier étage de compression (5) n'atteint le volume intermédiaire (13), dans lequel, le premier étage de compression (5) est ainsi mis hors circuit, et le compresseur multi-étage (4) fournit donc un fluide sous pression (L3) comprimé à plusieurs reprises qui est obtenu exclusivement par une compression du fluide sous pression de suralimentation (A) dans le deuxième étage de compression (6) afin de diminuer la consommation d'énergie du compresseur (4).

8. Procédé selon l'une quelconque des revendications précédentes, **caractérisé en ce que** le fluide sous pression de suralimentation (A) est admis dans la conduite de stockage (23) par l'ouverture d'une soupape de commutation pouvant être commandée (22a, 22b), dans lequel, lors de l'ouverture de la soupape de commutation (22a, 22b), le fluide sous pression de suralimentation (A) est acheminé à la fois dans le volume intermédiaire (13) et jusqu'à l'entrée de commande (26.1) de la soupape d'arrêt (26).

9. Installation de régulation de pression (1), en particulier pour un véhicule (200), présentant au moins :
un compresseur multi-étage (4) doté d'un premier étage de compression (5) pour fournir un fluide sous pression précomprimé (L2) et au moins d'un deuxième étage de compression (6) pour fournir un fluide sous pression comprimé (L3), le premier étage de compression (5) et le deuxième étage de compression (6) étant reliés l'un à l'autre par un volume intermédiaire (13) pour débiter le fluide sous pression précomprimé (L2) dans le deuxième étage de compression (6) en passant par le volume intermédiaire (13),
au moins une chambre à fluide sous pression (3.i ; i = 1 ... 4) reliée au deuxième étage de compression (6),
un réservoir de fluide sous pression (20) relié au deuxième étage de compression (6) pour stocker le fluide sous pression comprimé (L3),
une conduite de stockage (23) qui relie le réservoir de fluide sous pression (20) ou ladite au moins une chambre à fluide sous pression (3.i) au volume intermédiaire (13) afin de faire fonctionner l'installation de régulation de pression (1) avec un fluide sous pression (L4) stocké dans le réservoir de fluide sous pression (20) ou afin de ramener un fluide sous pression de chambre (L5) utilisé dans les chambres à fluide sous pression (3.i) dans le réservoir de fluide sous pression (20), et
une soupape d'arrêt (26), la soupape d'arrêt (26) coopérant avec le premier étage de compression (5) de telle sorte qu'une limitation de pression (pG) et/ou une limitation de débit volumétrique (QG) du fluide sous pression précomprimé (L2) débité du premier étage de compression (5) dans le volume intermédiaire (13) peuvent être atteintes en fonction du pilotage de la soupape d'arrêt (26) pour adapter une puissance de compression du premier étage de compression (5),
**caractérisée en ce qu'**une conduite de commande (26.2) bifurque de la conduite de stockage (23) vers une entrée de commande pneumatique (26.1) de la soupape d'arrêt (26) de sorte que le fluide sous pression stocké (L4) ou le fluide sous pression de chambre (L5) peut être amené sous forme de fluide sous pression de suralimentation (A) au volume intermédiaire (13) ainsi qu'en même temps par la conduite de commande (26.2) à l'entrée de commande (26.1) de la soupape d'arrêt (26) sous forme de pression de commande (pS) pour le pilotage pneumatique autorégulé de la soupape d'arrêt (26) par le fluide sous pression de suralimentation (A) se trouvant dans la conduite de commande (26.2),
dans laquelle en outre une fonction d'arrêt (24, pO) est prévue qui empêche que le fluide sous pression (L2), précomprimé par le premier étage de compression (5), fasse commuter la soupape d'arrêt (26) par le volume intermédiaire (13) et la conduite de commande (26.2) en vue de la limitation de pression (pG) et/ou de la limitation de débit volumétrique (QG).

10. Installation de régulation de pression (1) selon la revendication 9, **caractérisée en ce qu'**une conduite de purge (25) bifurquant du premier étage de compression (5) est disposée de telle sorte que le fluide sous pression (L2) précomprimé par le premier étage de compression (5) peut être évacué au moins en partie par l'intermédiaire de la conduite de purge (25) dans une conduite d'aspiration (10) ou une atmosphère (100) en fonction de la pression de commande (pS) en vue de la limitation de pression (pG) et/ou de la limitation de débit volumétrique (QG) du fluide sous pression (L2) précomprimé par le premier étage de compression (5) débité dans le volume intermédiaire (13) .

11. Installation de régulation de pression (1) selon la revendication 10, **caractérisée en ce que** la conduite de purge (25) bifurque entre une première soupape de sortie (12) et une première chambre de compression (5.2) du premier étage de compression (5).

12. Installation de régulation de pression (1) selon la revendication 10 ou 11, **caractérisée en ce que** la conduite de purge (25) débouche sur une conduite d'aspiration (10) ou une atmosphère (100) pour vider le fluide sous pression précomprimé (L2) dans la conduite d'aspiration (10) ou l'atmosphère (100).

13. Installation de régulation de pression (1) selon l'une quelconque des revendications 9 à 12, **caractérisée en ce que** la fonction d'arrêt est assurée par une soupape de surpression (24), par exemple un clapet antiretour (24), disposée entre le volume intermédiaire (13) et la soupape d'arrêt (26).

14. Installation de régulation de pression (1) selon l'une quelconque des revendications 9 à 13, **caractérisée en ce que** la fonction d'arrêt est réalisée par une pression d'ouverture (pO) de la soupape d'arrêt (26), la pression d'ouverture (pO) indiquant la pression à partir de laquelle la soupape d'arrêt (26) passe à une position au moins partiellement ouverte,
la pression d'ouverture (pO) étant supérieure à une pression intermédiaire maximale (p2max) du fluide sous pression (L2) précomprimé par le premier étage de compression (5) et inférieure ou égale à une pression de suralimentation minimale (pAmin) du fluide sous pression de suralimentation (A),
la pression intermédiaire maximale (p2max) et la pression de suralimentation minimale (pAmin) étant adaptées l'une à l'autre par une configuration adéquate du compresseur multi-étage (4).

15. Installation de régulation de pression (1) selon l'une quelconque des revendications 9 à 14, **caractérisée en ce que** dans la conduite de stockage (23), une première soupape de commutation pouvant être commandée (22a) est prévue pour libérer le fluide sous pression stocké (L4) sous forme de fluide sous pression de suralimentation (A), et une deuxième soupape de commutation pouvant être commandée (22b) est prévue pour libérer le fluide sous pression de chambre (L5) sous forme de fluide sous pression de suralimentation (A), le fluide sous pression de suralimentation (A) libéré passant de la conduite de stockage (23) au volume intermédiaire (13) ainsi qu'à l'entrée de commande (26.1) de la soupape d'arrêt (26).

16. Installation de régulation de pression (1) selon la revendication 15, **caractérisée en ce qu'**une largeur nominale (NW) des soupapes de commutation (22a, 22b) est comprise entre 1 mm et 4 mm afin d'augmenter un débit volumétrique de stockage (QS) dans le premier volume intermédiaire (13) et un débit volumétrique final (QE) provenant du deuxième étage de compression (6) .

17. Installation de régulation de pression (1) selon l'une quelconque des revendications 9 à 16, **caractérisée en ce que** la soupape d'arrêt (26) est réalisée sous la forme d'un distributeur pneumatique doté d'un ressort (27) pour la limitation de pression (pG) et/ou la limitation de débit volumétrique (QG) graduées du fluide sous pression précomprimé (L2).

18. Installation de régulation de pression (1) selon l'une quelconque des revendications 9 à 16, **caractérisée en ce que** la soupape d'arrêt (26) est réalisée sous la forme d'une soupape proportionnelle pneumatique (126) pour la limitation de pression (pG) et/ou la limitation de débit volumétrique (QG) en continu du fluide sous pression précomprimé (L2).

19. Installation de régulation de pression (1) selon l'une quelconque des revendications 9 à 18, **caractérisée en ce que** la soupape d'arrêt (26) ainsi que les composants (24) de la fonction d'arrêt (24, pO) sont intégrés dans un carter de compresseur (29), par exemple un couvercle de compresseur (28), du compresseur multi-étage (4).

20. Installation de régulation de pression (1) selon l'une quelconque des revendications 9 à 19, **caractérisée en ce que** l'installation de régulation de pression (1) est une suspension pneumatique (1) dans un véhicule (200), en particulier un véhicule utilitaire (200).

21. Véhicule (200), en particulier voiture particulière (200), comprenant une installation de régulation de pression (1) selon l'une quelconque des revendications 9 à 20 pour exécuter le procédé selon l'une quelconque des revendications 1 à 8.
